# NEUE EUROPÄISCHE PATENTSCHRIFT

(11) **EP 1 138 200 B2**
(45) Veröffentlichungstag und Bekanntmachung des Hinweises auf die Entscheidung über den Einspruch: **01.09.2010**
(45) Hinweis auf die Patenterteilung: 26.10.2005
(21) Anmeldenummer: 01106776.6
(22) Anmeldetag: 17.03.2001
(51) Int. Cl.: A01M 7/00

(54) **Fahrbare Vorrichtung zum Ausbringen einer Flüssigkeit**
Mobile apparatus for distributing a liquid
Dispositif mobile pour distribution d'un liquide

(30) Priorität: 20.03.2000 DE 10013800
(43) Veröffentlichungstag der Anmeldung: 04.10.2001
(73) Patentinhaber: Vogel & Noot Spray Solutions GmbH, 72555 Metzingen (DE)
(72) Erfinder: Neils, Wolfgang Olaf, 72537 Mehrstetten (DE); Wolk, Klaus, 87600 Kaufbeuren (DE); Tigges, Rudolf, 72813 St. Johann (DE)
(74) Vertreter: Hoeger, Stellrecht & Partner Patentanwälte

(56) Entgegenhaltungen:
- EP-A- 0 948 887
- EP-B- 0 118 366
- WO-A-83/02713
- DE-A- 3 401 734
- DE-A- 3 938 868
- DE-A- 4 013 992
- DE-T2- 68 917 436
- DE-U- 1 974 964
- FR-A- 2 254 176
- FR-A- 2 541 912
- GB-A- 2 039 202

## Beschreibung

Die Erfindung betrifft eine fahrbare Vorrichtung zum Ausbringen einer Flüssigkeit auf eine Fläche mit einer Ausbringeinrichtung, welche Düsen und eine oder mehrere Zuführungsleitungen zu den Düsen umfaßt, und mit einer Gestelleinrichtung zum Halten der Ausbringeinrichtung, wobei die Gestelleinrichtung eine Einsatzstellung aufweist, in der Düsen bezüglich einer Ausbringlinie ausgerichtet sind, und eine Transportstellung aufweist, in welcher eine Querabmessung der Gestelleinrichtung im Vergleich zur Einsatzstellung bezogen auf eine Fahrtrichtung verringert ist, wobei die Gestelleinrichtung ein oder mehrere verschiebliche Halteelemente umfaßt, durch deren Verschiebung die Gestelleinrichtung von der Transportstellung in die Einsatzstellung bringbar ist.

Eine solche Vorrichtung ist beispielsweise aus der DE 34 01 734 C2 bekannt. Sie läßt sich an einem Fahrzeug montieren oder ist selber fahrbar angetrieben. Um eine Flüssigkeit, beispielsweise ein Pflanzenschutzmittel, auf eine große Fläche durch Spritzen oder Sprühen ausbringen zu können, ist eine Vielzahl von Düsen notwendig, welche in der Einsatzstellung bezüglich einer Ausbringlinie ausgerichtet sind. Insbesondere können die Düsen auf einer Ausbringlinie liegen. In einer solchen Einsatzstellung weist dann die Gestelleinrichtung eine große Querabmessung (Spannweite) quer zu einer Fahrtrichtung auf. Um die Vorrichtung auch beispielsweise auf öffentlichen Straßen transportieren zu können, muß die Gestelleinrichtung in eine Transportstellung bringbar sein, bei welcher die Querabmessungen im Vergleich zur Einsatzstellung verringert sind und insbesondere die Gestelleinrichtung nicht über die Seiten eines Fahrzeugs wie eines Schleppers hinausragt.

Aus der EP 0 948 887 A1 ist eine unabhängig bewegliche Verteilungsvorrichtung bekannt. Es ist eine Mehrzahl von Kreuzstücken vorgesehen, welche verformbare Parallelogramme bilden. Ein Sprühmittel wird durch eine flexible Leitung an Düsen geführt.

Aus der FR 225 41 76 ist eine einziehbare Gestellvorrichtung für landwirtschaftliche Behandlungsmittel bekannt, welche zur Verbindung an einem Fahrzeug vorgesehen ist.

Davon ausgehend liegt der Erfindung die Aufgabe zugrunde, eine fahrbare Vorrichtung zu schaffen, mittels welcher Flüssigkeit auf einen großen Flächenbereich ausbringbar ist und bei welcher ein Übergang zwischen Transportstellung und Einsatzstellung auf einfache Weise erreichbar ist.

Diese Aufgabe wird bei der eingangs genannten fahrbaren Vorrichtung erfindungsgemäß mit den Merkmalen gemäß Anspruch 1 gelöst.

Erfindungsgemäß läßt sich die Gestelleinrichtung aus der Transportstellung in die Einsatzstellung durch eine translatorische und im wesentlichen lineare Verschiebung bringen. Ebenfalls läßt sich die Rückführung der Gestelleinrichtung von der Einsatzstellung in die Transportstellung durch eine im wesentlichen lineare Verschiebung bewirken. Dadurch ist der Raumbedarf, der nötig ist, um eine Gestelleinrichtung von der Transportstellung in die Einsatzstellung zu bringen, minimiert. Ist beispielsweise, wie in der DE 34 01 734 C2 gezeigt, die Gestelleinrichtung mit Drehgelenken versehen, welche quer zu der zu besprühenden Fläche ausgerichtet sind, dann muß der Raum hinter einer solchen Vorrichtung freigehalten werden, um ein entsprechendes Gestellelement aus seiner Transportstellung in eine Einsatzstellung schwenken zu können. Bei der erfindungsgemäßen Vorrichtung dagegen existieren keine solchen Einschränkungen, so daß auch ein Tank oder ein Nutzgerät hinter der Vorrichtung montiert werden kann und bei der Überführung der Transportstellung in die Einsatzstellung und umgekehrt muß dann dieser Tank oder die Vorrichtung nicht entfernt werden.

Der Übergang von der Transportstellung in die Einsatzstellung und umgekehrt läßt sich bei der erfindungsgemäßen Lösung auch auf einfache Weise erreichen, und insbesondere kann die entsprechende Bewegung auf konstruktiv einfache Weise motorisch angetrieben werden. Werden dagegen Drehgelenke vorgesehen, dann ist ein hoher Aufwand für entsprechende motorische Antriebe zur Durchführung einer Schwenkbewegung von Gestellelementen erforderlich.

Die erfindungsgemäße Vorrichtung läßt sich auch auf einfache Weise fernsteuern, beispielsweise von einer Fahrgastzelle aus, so daß ein Bediener keine zusätzlichen Handgriffe vornehmen muß, um die Transportstellung in die Einsatzstellung überzuführen oder umgekehrt und insbesondere die Fahrgastzelle dazu nicht verlassen muß.

Mit der erfindungsgemäßen Lösung läßt sich auch eine hohe Spannweite (große Querabmessungen) der Gestelleinrichtung in der Einsatzstellung erreichen. Bei der bekannten Drehgelenkvorrichtung ist die maximale Breite eines schwenkbaren Gestellelements vorgegeben. Eine Erhöhung der Spannweite läßt sich dann nur erreichen, wenn mehrere drehbare Gestellelemente verwendet werden und/oder Gestellelemente, die nachträglich eingehängt werden. Dies wiederum erhöht den konstruktiven Aufwand und vermindert den Bedienungskomfort. Bei der erfindungsgemäßen Lösung dagegen lassen sich große Spannweiten im Bereich von beispielsweise 28 m oder 36 m erreichen, da sich die verschieblichen Halteelemente in der Transportstellung "dicht" packen lassen und insbesondere die Höhe der Vorrichtung zum Erreichen einer kompakten Transportstellung ausnutzen läßt.

Auch läßt sich erfindungsgemäß die Spannweite der Gestelleinrichtung je nach Wahl der Verschiebungsstrecke einstellen und so anpassen. Durch die erfindungsgemäße Lösung kann praktisch stufenlos die Spannweite bis zu einer maximalen Spannweite eingestellt werden.

Es ist vorgesehen daß, jede Düse individuell ansteuerbar ist. Dadurch lassen sich bestimmte Muster auf eine Fläche sprühen; dies kann beispielsweise erforderlich sein, wenn bestimmte Reihen nicht besprüht werden sollen. Dies kann auch im Zusammenhang mit der Einstellung einer Sprühbreite verwendet werden, indem beispielsweise bestimmte Düsen abschaltet werden.

Ganz besonders vorteilhaft ist es, wenn das oder die Halteelemente so angeordnet und ausgebildet sind, daß sie im wesentlichen parallel zu der Ausbringlinie oder längs der Ausbringlinie verschieblich sind. Dadurch erhält man durch eine translatorische Verschiebung von der Transportstellung in die Einsatzstellung eine Einsatzstellung der Düsen selber, d. h. diese lassen sich durch Verschiebung der Halteelemente bezüglich der Ausbringlinie ausrichten und die erfindungsgemäße Vorrichtung wird dadurch einsatzfähig.

Vorteilhafterweise ist ein Aufnahmeraum zur zumindest teilweisen Aufnahme der Ausbringeinrichtung in der Transportstellung der Gestelleinrichtung vorgesehen. In diesem Aufnahmeraum ist dann die Ausbringeinrichtung geschützt gegen Beschädigungen und Verschmutzungen und insbesondere sind auch die Düsen geschützt. Günstigerweise ist dazu der Aufnahmeraum geschlossen.

Grundsätzlich ist es möglich, die Düsen fest an den Halteelementen anzuordnen und über eine bewegliche Zuführungsleitung die Düsen zu versorgen. Ganz besonders vorteilhaft ist es aber, wenn eine Düse an eine Zuführungsleitung gekoppelt ist. Die Ausbringeinrichtung umfaßt dann eine Abfolge von Düsen, welche an eine oder mehrere Zuführungsleitungen gekoppelt sind, wobei diese Zuführungsleitung bzw. -leitungen wiederum mit einem Tank für die Flüssigkeit verbunden sind.

Zur Führung von ist Düsen und einer oder mehrerer Zuführungsleitungen eine Energiekette vorgesehen. Eine solche Energiekette kann beispielsweise auf einer Trommel aufgewickelt werden oder auf einer Bahnführung mit Windungen geführt werden; eine solche Energiekette weist also eine hohe Biegbarkeit oder Flexibilität quer zu ihrer Längsrichtung auf. In der anderen Querrichtung zur Längsrichtung dagegen ist bei einer Energiekette - im Gegensatz beispielsweise zu einem Schlauch - die Flexibilität stark eingeschränkt. Da bei der erfindungsgemäßen Vorrichtung im wesentlichen bezüglich der Überführung zwischen Transportstellung und Einsatzstellung nur ein (translatorischer) Freiheitsgrad existiert, ist eine solche Energiekette hervorragend geeignet, um die Ausbringeinrichtung in ihre Einsatzstellung zu bringen. Durch die Energiekette lassen sich die Düsen und Zuführungsleitungen gekoppelt in ihre Einsatzstellung bringen bzw. zurück in ihre Transportstellung und insbesondere sind Zuführungsleitungen und Düsen auch geschützt.

Ganz besonders vorteilhaft ist es, wenn durch Bewegen der Gestelleinrichtung von der Transportstellung in die Einsatzstellung die Ausbringeinrichtung aus dem Aufnahmeraum in eine Einsatzstellung bringbar ist. Dadurch muß ein Bediener keine weiteren Vorkehrungen treffen und Handgriffe vornehmen, um die Düsen bezüglich der Ausbringlinie anzuordnen; vielmehr werden diese durch die Verschiebung der Halteelemente automatisch angeordnet. Die Bewegung der Gestelleinrichtung selber kann dabei als Antrieb für die Überführung der Ausbringeinrichtung in ihre Einsatzstellung genutzt werden.

Dazu ist es insbesondere vorteilhaft, wenn die Ausbringeinrichtung an ein äußeres Halteelement der Gestelleinrichtung so gekoppelt ist, daß beim Bewegen dieses Halteelements in die Einsatzstellung die Ausbringeinrichtung in die Einsatzstellung bringbar ist. Die Verschiebung des äußeren Halteelements zieht dann die Ausbringeinrichtung in ihre Einsatzstellung.

Ebenso ist es günstig, wenn die Ausbringeinrichtung durch Bewegen der Gestelleinrichtung aus der Einsatzstellung in die Transportstellung zumindest teilweise in den Aufnahmeraum bringbar ist, so daß ein Bediener keine weitere Anstalten treffen muß, um die Ausbringeinrichtung zurückzuführen.

Bei einer konstruktiv günstigen Variante einer Ausführungsform ist in dem Aufnahmeraum eine Trommel zum Aufwickeln der Ausbringeinrichtung angeordnet. Auf die Trommel läßt sich die Ausbringeinrichtung platzsparend aufwickeln und entsprechend läßt sich ein gezieltes Abwickeln der Ausbringeinrichtung von der Trommel erreichen, um die Ausbringeinrichtung in ihre Einsatzstellung zu führen, bei der die Düsen bezüglich der Ausbringlinie ausgerichtet sind.

Eine hoher Bedienungskomfort wird erreicht, wenn ein gesteuerter Antrieb für die Trommel vorgesehen ist, mittels welchem sich beim Bewegung der Gestelleinrichtung von der Einsatzstellung in die Transportstellung die Ausbringeinrichtung synchron mit der Bewegung der Halteelemente auf die Trommel aufwickelbar ist. Dadurch erfolgt ein gezieltes Aufwickeln der Ausbringeinrichtung auf die Trommel unter Vermeidung von Verwicklungen und dergleichen, wodurch wiederum gewährleistet ist, daß beim Überführen der Ausbringeinrichtung in die Einsatzstellung ein gezieltes Abwickeln der Trommel möglich ist. Das Abwickeln selber erfolgt insbesondere durch die Verschiebung der Halteelement angetrieben, wobei der Trommelantrieb selber beim Abwickeln entkuppelt ist.

Bei einer besonders vorteilhaften Variante einer Ausführungsform ist in dem Aufnahmeraum eine Bahnführung für die Ausbringeinrichtung angeordnet. Bei einer solchen Bahnführung wird die Ausbringeinrichtung nicht wie bei einer Trommel aufgewickelt, sondern die Ausbringeinrichtung wird auf der Bahnführung geführt und entsprechend läßt sie sich auf der Bahnführung verschieben. Dies hat den besonderen Vorteil, daß beim Einschieben der Ausbringeinrichtung (beim Übergang von der Einsatzstellung in die Transportstellung) kein getrennter Antrieb für die Führung der Ausbringeinrichtung vorgesehen werden muß, da bei entsprechender Ausbildung der Bahnführung die Ausbringeinrichtung durch die Bewegung des Halteelements selber in der Bahnführung verschoben wird. Dies läßt sich insbesondere im Zusammenhang mit einer entsprechend starren Ausbildung der Ausbringeinrichtung beispielsweise in der Form einer Energiekette erreichen.

Vorteilhafterweise ist die Bahnführung in Windungen ausgebildet, um so für eine platzsparende Unterbringung der Ausbringeinrichtung zu sorgen.

Ganz besonders vorteilhaft ist es, wenn die Bahnführung so angeordnet und ausgebildet ist, daß bei Bewegen der Gestelleinrichtung von der Einsatzstellung in die Transportstellung die Ausbringeinrichtung in der Bahnführung verschiebbar ist. Es muß dann kein separater Antrieb für die Ausbringeinrichtung vorgesehen werden; die Verschiebung der Gestelleinrichtung selber stellt dann den Antrieb für die Ausbringeinrichtung für die Führung aus dem Aufnahmeraum und für die Führung in den Aufnahmeraum dar.

Günstig ist es, wenn eine Düse so ausgebildet ist, daß sie beim Einfahren in den Aufnahmeraum sperrbar ist. Dadurch wird verhindert, daß aus in dem Aufnahmeraum sich befindlichen Düsen Flüssigkeit in den Aufnahmeraum eindringt. Dies ist insbesondere vorteilhaft im Zusammenhang mit einer kontinuierlichen Einstellbarkeit der Spannweite (Querabmessung) der Gestelleinrichtung.

Günstigerweise ist dann auch eine Düse so ausgebildet, daß sie beim Ausfahren aus dem Aufnahmeraum einschaltbar ist. Dadurch können alle Düsen, die außerhalb des Aufnahmeraums sind, Flüssigkeit sprühen oder spritzen, während die Düsen in dem Aufnahmeraum abgeschaltet sind.

Bei einer konstruktiv günstigen Ausführungsform ist eine Düse mit einem Stellstift versehen, welcher außerhalb des Aufnahmeraums in einer Freigabestellung ist und beim Einfahren der Düse in den Aufnahmeraum in eine Sperrstellung bringbar ist, bei der die zugeordnete Düse gesperrt ist. Dadurch ist gesichert, daß aus keiner Düse in dem Aufnahmeraum Flüssigkeit austreten kann.

Günstigerweise ist dabei der Aufnahmeraum mit einer Einführungsbahn versehen, durch die beim Einfahren einer Düse in den Aufnahmeraum ein Stellstift der Düse von der Freigabestellung in die Sperrstellung bringbar ist. Dadurch läßt sich eine automatische Sperrung der Düsen schon beim Einfahren in den Aufnahmeraum mit wenig Aufwand erreichen und entsprechend läßt sich eine Freigabe einer Düse beim Ausfahren aus dem Aufnahmeraum erreichen.

Günstigerweise ist dabei die Gestelleinrichtung zwischen einem Tank und dem Aufnahmeraum angeordnet, so daß der Tank nächstliegend einem Fahrzeugschwerpunkt positionierbar ist.

Bei einer Variante einer Ausführungsform ist zur Verschiebungsführung der Halteelemente eine Teleskopführung vorgesehen. Insbesondere ist es dann vorteilhaft, wenn ein Führungsmast für die Teleskopführung vorgesehen ist, welcher um eine Achse quer zur Ausbringlinie schwenkbar ist. In der Transportstellung ist dann der Mast unverschwenkt an der Vorrichtung gehalten und beim Übergang in die Einsatzstellung wird er im wesentlichen parallel zur Ausbringlinie verschwenkt und dann die Halteelemente aus dem Mast über die Teleskopführung ausgefahren.

Bei einer fertigungstechnisch günstigen und breite Einsatzmöglichkeiten aufweisenden Variante einer Ausführungsform umfaßt die Gestelleinrichtung eine diagonalenvariable Parallelogrammstruktur. Diese Parallelogrammstruktur ist insbesondere in der Art einer Nürnberger Schere ausgebildet. Durch die Variation der Diagonalen läßt sich eine Spannweite der Gestelleinrichtung einstellen und damit eine Verschieblichkeit von Halteelementen erreichen.

Günstigerweise ist dabei eine längenvariable Diagonale im wesentlichen parallel zur Ausbringlinie orientiert und insbesondere ist die variable Diagonale stets im wesentlichen parallel zur Ausbringlinie, unabhängig davon, ob die Gestelleinrichtung in der Transportstellung oder der Einsatzstellung ist. Auf diese Weise läßt sich auch eine platzsparende Aufbewahrung der Halteelemente in der Transportstellung erreichen.

Günstigerweise weist die Vorrichtung einen Mast auf, an dem die Parallelogrammstruktur an einem Punkt außerhalb der variablen Diagonale schwenkbar angelenkt ist und in einem weiteren Punkt außerhalb der Diagonale zur Variation der Diagonalen schwenkverschieblich angelenkt ist. Durch Verschiebung dieses weiteren Punktes kann dann entsprechend die Diagonale eingestellt werden und damit lassen sich Halteelemente parallel zur Ausbringlinie verschieben und dadurch wiederum die Spannweite der Gestelleinrichtung einstellen. Die Verschiebung des schwenkverschieblichen Punkts, welcher die Verschiebung der Halteelemente bewirkt, läßt sich auf einfache Weise durchführen und insbesondere über einen Antrieb. Es läßt sich also durch eine Linearverschiebung längs des Mastes eine Verschiebung der Halteelemente quer dazu erreichen.

Günstig ist es, wenn benachbarte Halteelemente so aneinander angelenkt sind, daß mittels ihnen ein Parallelogramm mit variabler Diagonale gebildet ist. Dadurch läßt sich auf einfache Weise eine Verschieblichkeit eines Halteelements erreichen.

Konstruktiv günstig ist es, wenn ein Halteelement einen ersten Kreuzarm und einen zweiten Kreuzarm umfaßt, welche schwenkbar aneinander angelenkt sind. Durch Verknüpfung solcher Halteelemente läßt sich auf einfache Weise eine diagonalenvariable Parallelogrammstruktur ausbilden; um auf einfache Weise eine Variabilität in der Diagonale zu erreichen, ist es besonders vorteilhaft, wenn der erste und zweite Kreuzarm im wesentlichen mittig aneinander angelenkt sind.

Bei einer vorteilhaften Variante einer Ausführungsform sind der erste Kreuzarm und der zweite Kreuzarm versetzt bezüglich ihrer Mitte aneinander angelenkt, beispielsweise um ca. 0,1 % bis 0,5 % der Länge eines Kreuzarms. Dadurch läßt sich ein Durchhängen eines Halteelements durch eine entsprechend hergestellte Vorhaltung kompensieren.

Ganz besonders günstig ist es, wenn Kreuzarme benachbarter Halteelemente so schwenkbar aneinander angelenkt sind, daß zwischen den Kreuzarmen ein Parallelogramm mit variabler Diagonale gebildet ist. Dadurch sind benachbarte Halteelemente aneinander gekoppelt, wobei eine Schwenkbewegung eines Halteelements über die schwenkbare Anlenkung an ein benachbartes Halteelement übertragbar ist und so sich eine Verschieblichkeit der Gestelleinrichtung als Ganzes realisieren läßt.

Eine variable Diagonale liegt dabei zwischen dem Anlenkpunkt des ersten und zweiten Kreuzarms eines Halteelements und dem entsprechenden Anlenkpunkt eines benachbarten Halteelements.

Günstig ist es, wenn ein erster Kreuzarm eines inneren Halteelements schwenkverschieblich an einem Mast und ein zweiter Kreuzarm des inneren Halteelements schwenkbar an dem Mast angelenkt ist. Über die Verschiebung des ersten Kreuzarms an dem Mast und gleichzeitig seine Verschwenkbarkeit läßt sich dann mittels der Anlenkung der beiden Kreuzarme miteinander die Diagonale des ersten (Halb-)Parallelogramms des inneren Halteelements einstellen und damit auch die Diagonalen der Parallelogramme der Parallelogrammstruktur.

Vorteilhafterweise liegt dabei eine Schwenkachse der Parallelogrammstruktur zur Diagonalenvariation in der Parallelogrammstruktur quer zur Ausbringlinie. Dadurch läßt sich auf einfache Weise eine Verschieblichkeit der Halteelemente längs oder parallel zur Ausbringlinie erreichen.

Bei einer fertigungstechnisch günstigen Variante einer Ausführungsform ist ein Kreuzarm durch ein Lochblech gebildet. Dadurch tritt eine Gewichtsersparnis an einem Halteelement und damit der Gestelleinrichtung auf.

Zur Erhöhung der Stabilität einer Gestelleinrichtung ist es vorteilhaft, wenn eine Mehrzahl von Parallelogrammstrukturen mit gleicher Diagonalenvariabilität quer zur Ausbringlinie nebeneinander angeordnet sind. Insbesondere ist dies vorgesehen für ein inneres Halteelement und für innenliegende Halteelemente, da diese im Vergleich zu äußeren Halteelementen ein größeres Gewicht (zusätzlich noch das der äußeren Halteelemente) tragen müssen. Dadurch wird auch eine konstruktiv einfache Lösung bereitgestellt, denn durch die Vervielfachung der Parallelogrammstruktur lassen sich die gleichen Strukturelemente verwenden und trotzdem eine hohe Stabilität erreichen.

Bei einer Variante einer Ausführungsform ist ein inneres Halteelemente über eine Spindelführung verschieblich an dem Mast geführt. Eine Spindelführung hat insbesondere den Vorteil, daß jeweils durch eine bestimmte eingestellte Drehstellung der Spindel das innere Halteelement in einer bestimmten Position gehalten wird und dadurch die variable Diagonale bestimmt wird, ohne daß weitere Festlegungsmittel vorgesehen werden müssen.

Bei einer weiteren Variante ist ein inneres Halteelement über eine Drehschiebeführung verschieblich an dem Mast schwenkbar angelenkt. Bei einer solchen Drehschiebeführung läßt sich insbesondere der Abstand der Anlenkpunkte des inneren Halteelements am Mast auf einfache Weise einstellen.

Vorteilhaft ist es dazu, wenn das innere Halteelement über eine Stütze an dem Mast beweglich ist. Durch Bewegung der Stütze und insbesondere durch Verlängerung bzw. Verkürzung der Stütze läßt sich dann der Abstand zwischen den beiden Anlenkpunkten des inneren Halteelements an dem Mast verändern, um so eine Verschiebung der Halteelemente der Gestelleinrichtung von der Transportstellung in die Einsatzstellung und umgekehrt zu ermöglichen.

Günstig ist es dann, wenn ein Antrieb zur Verschiebung des Anlenkpunktes an der Parallelogrammstruktur an dem Mast vorgesehen ist. Ein solcher Antrieb kann auch ferngesteuert werden, beispielsweise von einer Fahrgastzelle aus, um so einen hohen Bedienungskomfort zu erreichen.

Bei einer Variante einer Ausführungsform ist ein Hydraulikantrieb vorgesehen. Dies ist insbesondere vorteilhaft im Zusammenhang mit einer Stütze, mittels welcher das innere Halteelement so bezüglich des Mastes bewegt wird, daß eine Verschiebung der Halteelemente nach außen resultiert. Es ist also günstig, wenn über den Hydraulikantrieb eine Stütze beweglich ist, an welcher ein inneres Halteelement abgestützt ist.

Bei einer weiteren Variante einer Ausführungsform ist ein Spindelantrieb vorgesehen, mittels dem eine Spindel drehbar ist, so daß dadurch ein Anlenkpunkt eines inneren Halteelements an dem Mast verschieblich ist. Dies läßt sich insbesondere über eine Gewindeführung erreichen. Wird die Spindel gedreht, so erfolgt eine relative Verdrehung zwischen einem Außengewinde und einem Innengewinde. Ist beispielsweise das innere Halteelement über das Innengewinde angelenkt, so läßt sich dadurch eine Verschiebung an dem Mast erreichen.

Es ist auch vorteilhaft, wenn ein handbetätigter Antrieb vorgesehen ist. Dieser läßt sich insbesondere im Zusammenhang mit einer Spindelführung auf konstruktiv einfache Weise ausbilden. Er kann z. B. eingesetzt werden, wenn ein motorischer Antrieb ausgefallen ist.

Vorteilhafterweise sitzt an einem Halteelement ein Führungsprofil für die Ausbringeinrichtung. Dieses Führungsprofil sorgt dafür, daß die Ausbringeinrichtung an einem Halteelement gehalten ist und insbesondere die Führung bei dem Übergang von der Transportstellung in die Einsatzstellung und umgekehrt korrekt erfolgt. Außerdem lassen sich dadurch Düsen vor mechanischen Einwirkungen schützen.

Günstigerweise liegt in der Transportstellung der Gestelleinrichtung die Ausbringeinrichtung zumindest teilweise in Führungsprofilen der Halteelemente. Es muß dann beim Verschieben der Halteelemente nicht mehr dafür gesorgt werden, daß die Ausbringeinrichtung eingefädelt wird, sondern es folgt eine Verschiebung innerhalb der Führungsprofile.

Günstig ist es, wenn die Bewegung der Gestelleinrichtung über Antriebseinrichtungen steuerbar ist. Es läßt sich dann ein hoher Bedienungskomfort erreichen; insbesondere ist es vorteilhaft, wenn die Bewegung der Gestelleinrichtung von einer Fahrgastzelle aus steuerbar ist.

Die nachfolgende Beschreibung dient im Zusammenhang mit der Zeichnung der näheren Erläuterung der Erfindung. Es zeigen:
- Figur 1: eine schematische Hinteransicht eines Schleppers, an welchem ein erstes Ausführungsbeispiel einer erfindungsgemäßen Vorrichtung montiert ist, wobei diese Vorrichtung in der Transportstellung ist;
- Figur 2: die Vorrichtung gemäß Figur 2 in der Einsatzstellung;
- Figur 3: eine Teildarstellung des ersten Ausführungsbeispiels gemäß Figur 1 mit einer Gestelleinrichtung in Transportstellung und Einsatzstellung;
- Figur 4: ein zweites Ausführungsbeispiel einer Gestelleinrichtung in der Transportstellung;
- Figur 5: ein Halteelement der Ausführungsform gemäß Figur 4 in der Einsatzstellung;
- Figur 6: ein Ausführungsbeispiel einer Führungsbahn in einem Aufnahmeraum;
- Figur 7: eine obere Schnittansicht einer Ausführungsform einer erfindungsgemäßen Vorrichtung, wobei die Gestelleinrichtung nicht gezeigt ist;
- Figur 8: ein Ausführungsbeispiel einer Gestelleinrichtung, welche an der Ausführungsform gemäß Figur 7 vorgesehen ist;
- Figur 9: eine Teilansicht eines weiteren Ausführungsbeispiels einer erfindungsgemäßen Gestelleinrichtung;
- Figur 10: eine Schnittansicht eines Mastes bei einer Ausführungsform einer erfindungsgemäßen Vorrichtung;
- Figur 11: eine Detailansicht des Bereichs A gemäß Figur 10;
- Figur 12: eine Detailansicht des Bereichs B gemäß Figur 10, wobei die Gestelleinrichtung in einer Einsatzstellung ist;
- Figur 13: die gleiche Ansicht wie Figur 12, wobei die Gestelleinrichtung in der Transportstellung ist;
- Figur 14: eine Schnittansicht längs der Linie C-C gemäß Figur 10;
- Figur 15: eine Detailansicht einer Spindelführung im Zusammenhang mit der Ausführungsform gemäß Figur 10;
- Figur 16: eine schematische Hinteransicht eines Schleppers, an welchem ein weiteres Ausführungsbeispiel einer erfindungsgemäßen Vorrichtung montiert ist, wobei die entsprechende Gestelleinrichtung in der Transportstellung ist und
- Figur 17: die gleiche Ansicht wie Figur 17, wobei die Gestelleinrichtung in der Einsatzstellung ist.

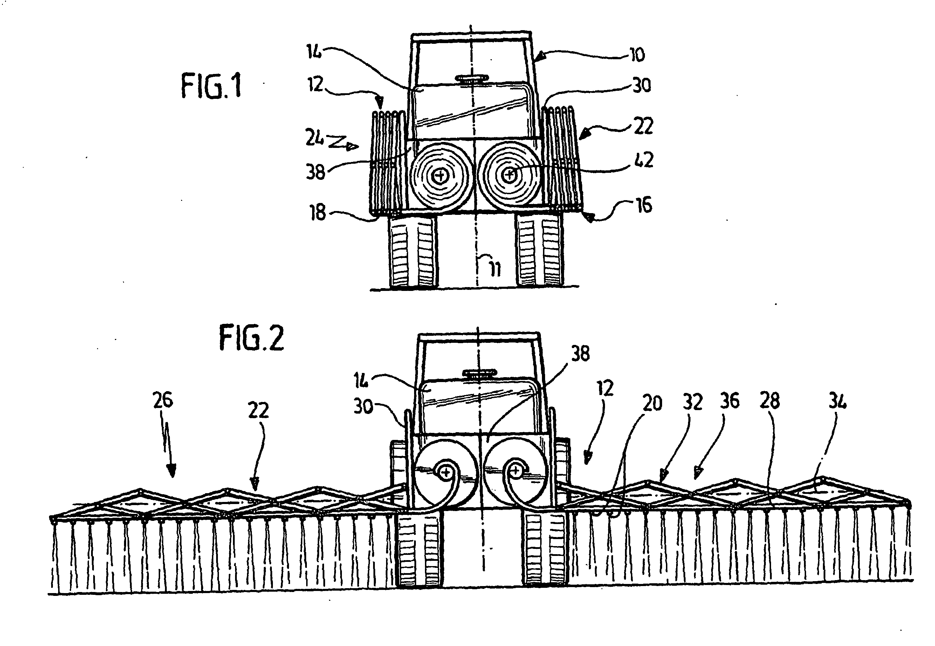

Eine erfindungsgemäße fahrbare Vorrichtung zum Ausbringen einer Flüssigkeit auf eine Fläche läßt sich, wie in den Figuren 1 und 2 beispielhaft gezeigt, an einem Schlepper 10 montieren.

Die erfindungsgemäße Vorrichtung, welche in den Figuren 1 und 2 als Ganzes mit 12 bezeichnet ist, ist im wesentlichen symmetrisch um eine Mittelebene 11 ausgebildet und umfaßt dabei einen Tank 14. Mit dem Tank 14 ist eine Ausbringeinrichtung 16 verbunden, die eine Fluidführung insbesondere in der Form von Zuführungsleitungen von dem Tank 14 zu Düsen 20 (Figur 2) umfaßt; durch die Düsen 20 läßt sich die Flüssigkeit aus dem Tank beispielsweise auf ein Feld durch Spritzen oder Sprühen ausbringen.

Zum Halten der Ausbringeinrichtung 16 ist eine Gestelleinrichtung 22 jeweils rechts und links der Mittelebene 11 vorgesehen, welche, wie in Figur 1 gezeigt, eine Transportstellung 24 aufweist. Es ist dabei insbesondere jeder Gestelleinrichtung eine getrennte Ausbringeinrichtung zugeordnet. In der Transportstellung 24 ist eine Querabmessung der Vorrichtung 12 quer zu einer Fahrtrichtung minimiert, d. h. die Spannweite der Gestelleinrichtung ist so verringert, daß die erfindungsgemäße Vorrichtung 12 mittels des Schleppers 10 transportiert werden kann und insbesondere die Vorrichtung 12 nicht seitlich über den Schlepper 10 zu weit hinausragt und insbesondere eine Transportbreite beispielsweise kleiner als 2,70 m ist.

Um gleichzeitig einen möglichst großen Flächenbereich mit der Flüssigkeit des Tanks 14 besprühen oder bespritzen zu können, weist die Gestelleinrichtung 22 eine Einsatzstellung 26 mit großer Spannweite der Gestelleinrichtung 22 auf, bei der eine Mehrzahl von Düsen 20 an der Gestelleinrichtung 22 gehalten sind und bezüglich einer Ausbringlinie 28 ausgerichtet sind. Die Düsen 20 können dabei selber auf der Ausbringlinie 28 liegen oder versetzt zueinander sein.

Die Ausbringlinie 28 liegt insbesondere quer zur Fahrtrichtung des Schleppers 10 (in den Figuren 1 und 2 ist diese Fahrtrichtung senkrecht zur Zeichenebene).

Die erfindungsgemäße Ausbringvorrichtung 12 weist einen starr an dem Schlepper montierbaren Mast 30 auf, bezüglich dem die Gestelleinrichtung 22 quer zur Fahrtrichtung verschieblich ist, um so die Ausbringeinrichtung 16 über die Bewegung der Gestelleinrichtung 22 von der Transportstellung 24 in die Einsatzstellung 26 selber in eine Einsatzstellung bringen zu können bzw. um die Gestelleinrichtung 22 aus der Einsatzstellung 26 in die Transportstellung 24 bringen zu können.

Dazu umfaßt die in Figur 1 und 2 gezeigte Gestelleinrichtung 22 eine Parallelogrammstruktur 32 mit längenvariabler Diagonale 34 in der Art einer Nürnberger Schere. Dadurch läßt sich die Gestelleinrichtung 22 zwischen der Transportstellung 24 und der Einsatzstellung 26 verschieben, wobei die Parallelogrammstruktur 32 durch eine Mehrzahl von Halteelementen 36 gebildet ist, die parallel oder längs zur Ausbringlinie 28 über die Parallelogrammstruktur 32 verschiebbar sind; durch solche Halteelemente 36 wird die Ausbringeinrichtung 16 gehalten.

Bei dem in den Figuren 1 und 2 gezeigten Ausführungsbeispiel ist ein insbesondere geschlossener Aufnahmeraum 38 vorgesehen, welcher zur zumindest teilweisen Aufnahme der Ausbringeinrichtung 16 in der Transportstellung 24 dient. Dazu ist in der gezeigten Variante in dem Aufnahmeraum 38 eine Trommel 40 drehbar mit einer Drehachse 42 quer zur Ausbringlinie 28 angeordnet. In der Transportstellung 24 ist die Ausbringeinrichtung 16 größtenteils auf die Trommel 40 aufgewickelt. Beim Bewegen der Gestelleinrichtung 22 in die Einsatzstellung 26 wird dann die Ausbringeinrichtung 16 von der Trommel 40 abgewickelt.

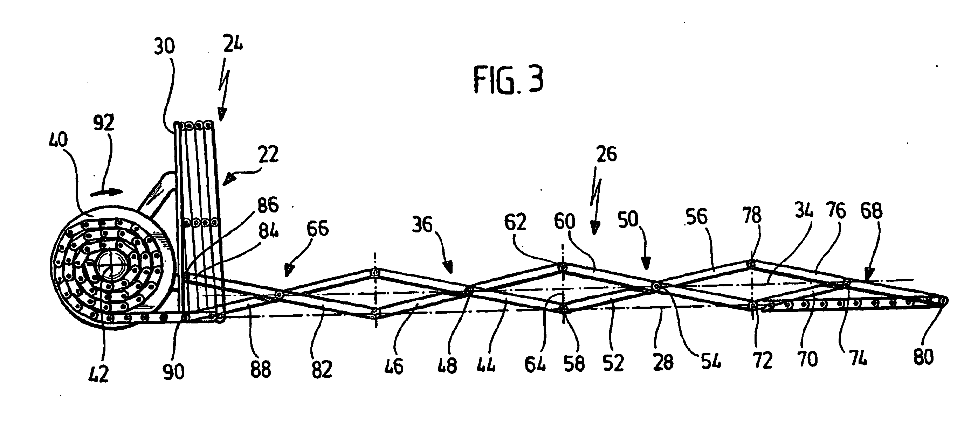

In Figur 3 ist die Transportstellung 24 und die Einsatzstellung 26 der Gestelleinrichtung 22 in einem Bild eingezeichnet. Ein Halteelement 36 umfaßt dabei einen ersten Kreuzarm 44 und einen zweiten Kreuzarm 46, welche über ein Drehgelenk 48 schwenkbar aneinander angelenkt sind, wobei die Drehachse des Drehgelenks 48 parallel zur Drehachse 42 der Trommel 40 ist, d. h. quer zur Ausbringlinie 28 ist. Insbesondere sind der erste Kreuzarm 44 und der zweite Kreuzarm 46 jeweils mittig aneinander angelenkt. Vorteilhaft ist es jedoch, wenn sie etwas außermittig aneinander angelenkt sind, beispielsweise um ca. 0,1 % bis 0,5 % bezogen auf die Länge eines Kreuzarms 44,46 gegenüber deren Mitte versetzt, um ein Durchhängen zu vermeiden.

Ein zu dem Halteelement 36 benachbartes Halteelement 50 ist so an dem Halteelement 36 angelenkt, daß zwischen den benachbarten Halteelementen 36 und 50 ein Parallelogramm 52 der Parallelogrammstruktur 32 mit einer variablen Diagonale 34 gebildet ist, wobei diese zwischen dem Anlenkpunkt des Drehgelenks 48 des Halteelements 36 und einem entsprechenden Anlenkpunkt eines entsprechenden Drehgelenks 54 des Halteelements 50 verläuft.

Dazu ist ein erster Kreuzarm 56, welcher parallel zu dem zweiten Kreuzarm 46 des Halteelements 36 ist, an den ersten Kreuzarm 44 des benachbarten Halteelements 36 über eine Gelenkverbindung 58 schwenkbar angelenkt, wobei eine Schwenkachse dieser Gelenkverbindung 58 parallel zur Achse 42 ist. Ferner ist ein zweiter Kreuzarm 60 des Halteelements 50, welcher parallel zu dem ersten Kreuzarm 44 des Halteelements 36 ist, über eine Gelenkverbindung 62 schwenkbar an den zweiten Kreuzarm 46 des Halteelements 36 angelenkt.

Eine Verbindungslinie 64 zwischen den Gelenkverbindungen 58 und 62 ist dabei stets, d. h. in der Transportstellung 24, der Einsatzstellung 26 und auch in Zwischenstellungen, senkrecht zu der Diagonalen 34.

Wie aus Figur 3 ersichtlich ist, nimmt beim Übergang von der Transportstellung 24 in die Einsatzstellung 26 der Abstand zwischen den Gelenkverbindungen 58 und 62 ab und nimmt der Diagonalenabstand zwischen den Anlenkpunkten 48 und 54 zu. Dies bewirkt, daß die Halteelemente 36, 50 im Ganzen parallel zur Ausbringlinie 28, d. h. parallel zur Diagonalen 34, nach außen verschoben werden; durch Variation der Diagonalen 34 wird somit eine Verschiebung der Halteelemente 36, 50 bewirkt, so daß sich dadurch die Gestelleinrichtung 22 aus der Transportstellung 24 in die Einsatzstellung 26 bringen läßt und umgekehrt.

Die Gestelleinrichtung 22 weist dabei ein inneres Halteelement 66, welches an den Mast 30 angelenkt ist, und ein äußeres Halteelement 68 auf.

Das äußere Halteelement 68 weist einen ersten Kreuzarm 70 auf, welcher zwischen einer Gelenkverbindung 72 entsprechend der Gelenkverbindung 58 an ein benachbartes Halteelement 50 angelenkt ist und über ein Drehgelenk 74 entsprechend dem Drehgelenk 48 an einen zweiten Kreuzarm 76 angelenkt ist. Dieser zweite Kreuzarm 76 wiederum ist über eine Gelenkverbindung 78 ähnlich der Gelenkverbindung 62 an einen ersten Kreuzarm 56 eines benachbarten Halteelements 50 angelenkt.

Die Ausbringeinrichtung 16 ist an einem äußeren Ende des zweiten Kreuzarms 76 des äußeren Halteelements 68 über ein Drehgelenk 80 quer zur Ausbringlinie 28 drehbar angelenkt, sonst aber unverschieblich gegenüber diesem Drehgelenk 80. Dadurch wird beim Ausfahren der Gestelleinrichtung 22 aus der Transportstellung 24 in die Einsatzstellung 26, wodurch eine Verschiebung des äußeren Halteelements 68 parallel zur Ausbringlinie 28 bewirkt wird, die Ausbringeinrichtung 16 mit dem äußeren Halteelement 68 nach außen verschoben, wodurch eine Abwicklung der Ausbringeinrichtung 16 von der Trommel 40 bewirkt wird.

Das innere Halteelement 66 umfaßt einen ersten Kreuzarm 82, welcher an einem Ende wie oben beschrieben an den zweiten Kreuzarm 46 eines benachbarten Halteelements 36 angelenkt ist. An dem anderen Ende 84 ist dieser erste Kreuzarm 82 an dem Mast 30 drehverschieblich geführt, so daß einerseits die Höhe eines entsprechenden Anlenkpunkts 86 dieses ersten Kreuzarms 82 an dem Mast 30 veränderlich ist und andererseits der erste Kreuzarm 82 gegenüber dem Mast 30 schwenkbar ist.

Ferner umfaßt das innere Halteelement 66 einen zweiten Kreuzarm 88, welcher an einem Ende wie bereits beschrieben an den ersten Kreuzarm 44 eines benachbarten Halteelements 36 angelenkt ist und an seinem anderen Ende schwenkbar über eine Drehgelenkverbindung 90 an dem Mast 30 schwenkbar mit Schwenkachse parallel zur Achse 42 angelenkt ist.

Durch die Verschieblichkeit des Anlenkpunkts 86 ist dann eben der Abstand zwischen diesem Anlenkpunkt 86 und der Drehgelenkverbindung 90 einstellbar, welcher dem Abstand zwischen der Gelenkverbindung 58 und der Gelenkverbindung 62 entspricht. Aufgrund der schwenkbaren Ankopplung des ersten Kreuzarms 82 und des zweiten Kreuzarms 88 an dem Mast 30 und der Kopplung dieser beiden Kreuzarme 82 und 88 selber über eine mittige Gelenkverbindung ist dadurch dann die Diagonale 34 variierbar, d. h. bei einem Wegschieben des Anlenkpunkts 86 von der Drehgelenkverbindung 90 wird entsprechend die Diagonale 34 eines Parallelogramms verkürzt und beim Zuschieben des Anlenkpunkts 86 auf die Drehgelenkverbindung 90 zu wird die Diagonale 34 eines Parallelogramms 52 verlängert.

Dies bewirkt entsprechend einen Übergang von der Einsatzstellung 26 in die Transportstellung 24 bzw. von der Transportstellung 24 in die Einsatzstellung 26, wobei jeweils die Querabmessungen der erfindungsgemäßen Vorrichtung bezogen auf eine Fahrtrichtung des Schleppers 10 verringert (Übergang in die Transportstellung 24) oder vergrößert werden (Übergang in die Einsatzstellung 26), d. h. die Spannweite wird entsprechend variiert.

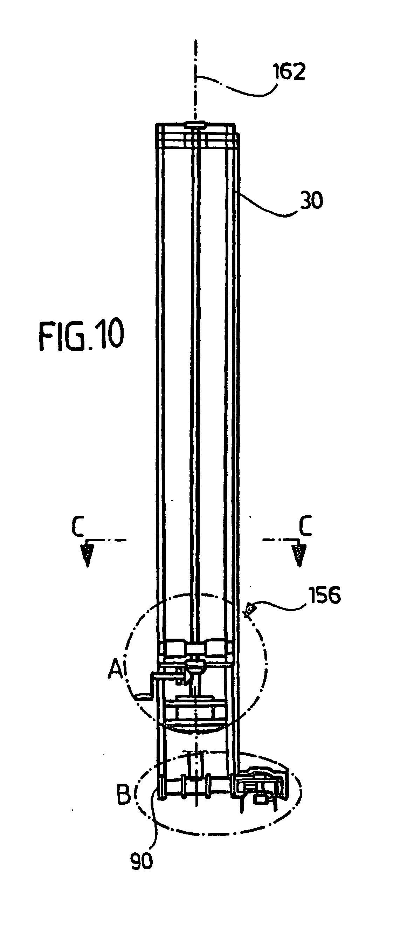

Die Verschiebung des Anlenkpunkts 86 wird unten im Zusammenhang mit der Figur 10 noch näher erläutert.

Um dabei beim Bewegen der Gestelleinrichtung 22 von der Einsatzstellung 26 in die Transportstellung 24 ein Aufwickeln der Ausbringeinrichtung 16 auf der Trommel 40 zu bewirken, ist bei einer Variante einer Ausführungsform ein Trommelantrieb (in der Zeichnung nicht gezeigt) vorgesehen, mittels welchem die Trommel 40 in der Aufwicklungsrichtung 92 drehbar ist.

Es kann dabei vorgesehen sei, daß mittels dieses Trommelantriebs auch aufgrund der Kopplung der Ausbringeinrichtung 16 an das äußere Halteelement 68 die Gestelleinrichtung 22 von der Einsatzstellung 26 in die Transportstellung 24 bewegt wird.

Alternativ kann es vorgesehen sein, daß ein Antrieb zur Bewegung der Gestelleinrichtung 22 grundsätzlich unabhängig von dem Trommelantrieb ausgeführt ist, wobei aber insbesondere diese beiden Antriebe derart synchronisiert sind, daß die Trommelaufwicklung mit der entsprechenden Geschwindigkeit wie das Einfahren der Gestelleinrichtung 22 aus der Einsatzstellung 26 erfolgt. Diese Geschwindigkeit läßt sich aus der relativen Geschwindigkeit des Anlenkpunkts 86 ermitteln.

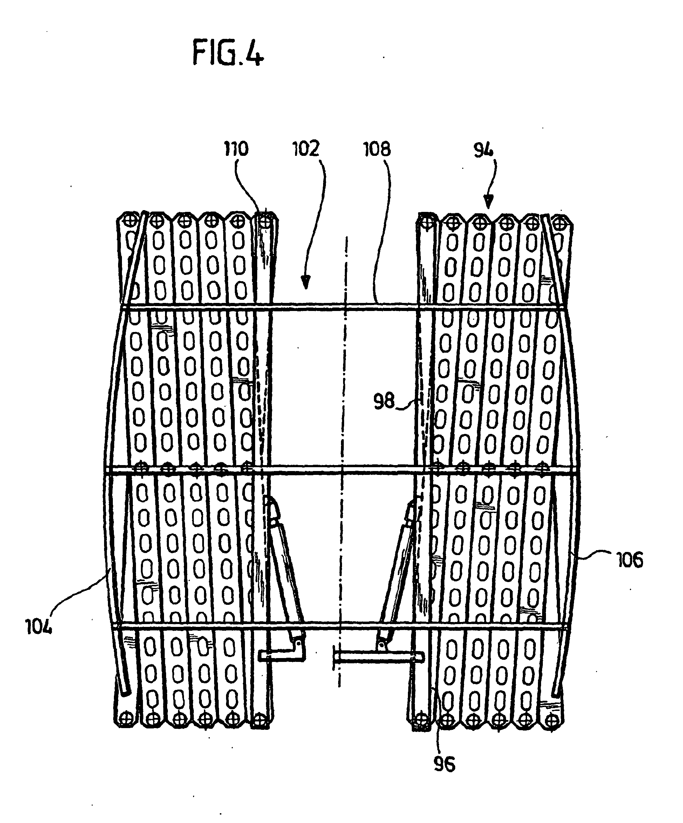

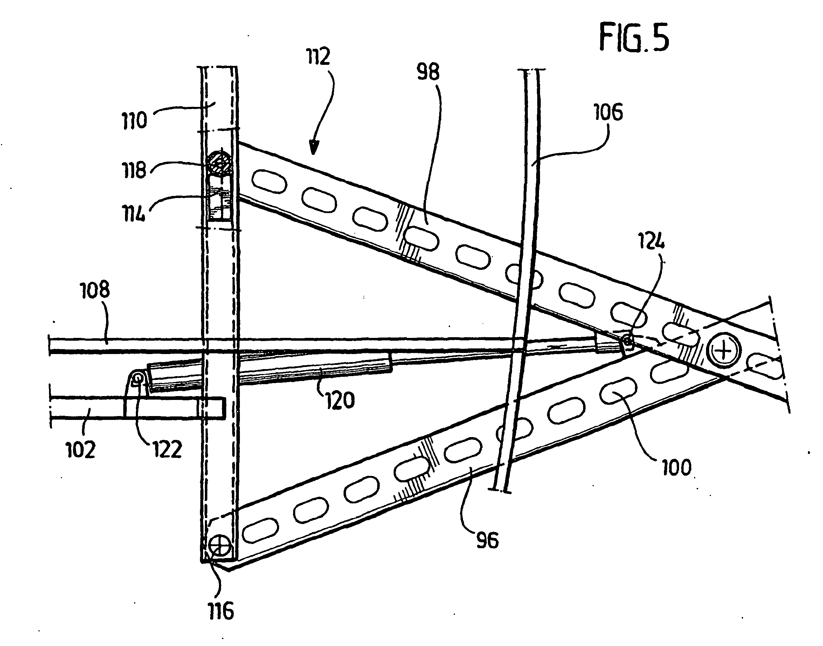

Bei einem zweiten Ausführungsbeispiel einer Gestelleinrichtung 94, welche in den Figuren 4 und 5 gezeigt ist, sind die entsprechenden Halteelemente grundsätzlich gleich ausgebildet wie oben beschrieben. Insbesondere umfassen die Halteelemente jeweils einen ersten Kreuzarm 96 und einen zweiten Kreuzarm 98, welche wie oben beschrieben aneinander angelenkt sind und an entsprechende Kreuzarme eines benachbarten Halteelements angelenkt sind. In dem gezeigten Ausführungsbeispiel sind die entsprechenden Kreuzarme 96, 98 dabei durch Lochbleche gebildet, die mit Ausnehmungen 100 versehen sind.

Es ist dabei eine an dem Schlepper 10 fest montierbare Haltevorrichtung 102 vorgesehen, welche jeweils äußere Elemente 104, 106 umfaßt, zwischen denen Querstreben 108 angeordnet sind. Ein Mast 110 ist starr gegenüber dieser Haltevorrichtung 102.

Der erste Kreuzarm 96 eines inneren Halteelements 112 ist drehbar an dem Mast 110 angelenkt und der entsprechende zweite Kreuzarm 98 über ein Dreh-Schiebegelenk 114 mit dem Mast 110 verbunden. Dadurch läßt sich der Abstand zwischen einem Anlenkpunkt 116 des ersten Kreuzarms 96 an den Mast 110 und einem Anlenkpunkt 118 des zweiten Kreuzarms 98 an den Mast 110 variieren, um so die Diagonale 34 der Parallelogrammstruktur 32 zu variieren.

Der erste Kreuzarm 96 ist über eine teleskopartig ausfahrbare Stütze 120 mit der Haltevorrichtung 102 verbunden. Dazu ist die Stütze 120 an ihrem einen Ende über eine Drehgelenkverbindung 122 an die Haltevorrichtung 102 angelenkt und an ihrem anderen Ende über eine Drehgelenkverbindung 124 an den ersten Kreuzarm 96. Mittels dieser Stütze 122 ist das Dreh-Schiebegelenk 114 in einem bestimmten Abstand über dem Anlenkpunkt 116 haltbar, wobei dieser Abstand durch Ausfahren der Stütze 120 variierbar ist.

In Figur 4 ist dabei die Transportstellung 24 gezeigt, bei der der Anlagepunkt 118 einen maximalen Abstand von dem Anlagepunkt 116 hat und entsprechend die Diagonale 34 eine minimale Länge aufweist. Die Länge der Stütze zwischen der Drehgelenkverbindung 122 und der Drehgelenkverbindung 124 ist dann minimiert, d. h. die Stütze 120 ist nicht ausgefahren.

Zum Übergang in die Einsatzstellung 26 wird die Stütze ausgefahren. Dazu ist ein entsprechender Antrieb vorgesehen und insbesondere ein Hydraulikantrieb (in der Zeichnung nicht gezeigt). Es verlängert sich dann der Abstand zwischen der Drehgelenkverbindung 122 und der Drehgelenkverbindung 124. Dadurch wird der erste Kreuzarm 96 nach unten gedrückt, d. h. von dem Mast 110 wegverschwenkt. Dadurch wiederum verschwenkt sich der zweite Kreuzarm 98 und bewirkt, daß über eine Verschiebung des Dreh-Schiebegelenks 114 der Abstand zwischen dem Anlenkpunkt 118 und 116 verringert wird und entsprechend die Diagonale 34 sich verlängert. Dies wiederum führt zu dem Ausfahren der Gestelleinrichtung 98 aus der Transportstellung 24 in die Einsatzstellung 26.

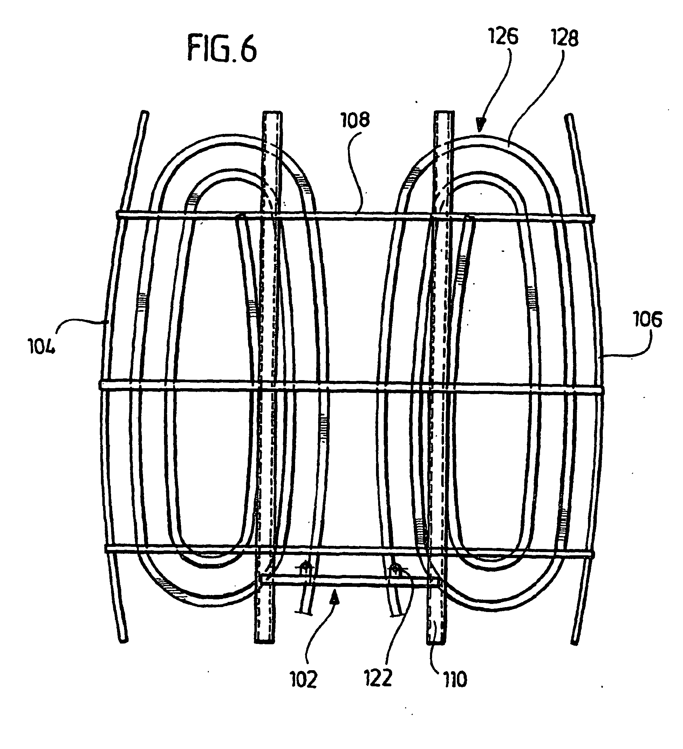

In dem Aufnahmeraum 38 der Gestelleinrichtung 94 ist, wie in Figur 6 gezeigt, eine Bahnführung 126 angeordnet, welche eine Mehrzahl von Windungen 128 umfaßt und an einem unteren Ende dem inneren Halteelement 112 zu offen ist. Auf dieser Bahnführung 126 ist die Ausbringeinrichtung 16, welche insbesondere als Energiekette ausgebildet ist, geführt. Die einzelnen Windungen 128 der Bahnführung 126 sind dabei so angeordnet und ausgebildet, daß die Ausbringeinrichtung 16 beim Übergang von der Einsatzstellung 26 in die Transportstellung 24 mittels der Verschiebung der Gestelleinrichtung 94 in der Bahnführung 126 verschiebbar ist, d. h. es muß kein zusätzlicher Antrieb zur Führung der Ausbringeinrichtung 16 in dem Aufnahmeraum 38 vorgesehen werden. Das Herausführen der Ausbringeinrichtung 16 aus der Bahnführung 126 bei der Bewegung der Gestelleinrichtung 94 von der Transportstellung 24 in die Einsatzstellung 26 erfolgt eben durch die Bewegung dieser Gestelleinrichtung 94 und ebenso erfolgt das Einführen und Bewegen auf der Bahnführung 126 beim Übergang von der Einsatzstellung 26 in die Transportstellung 24 allein durch die Bewegung der Gestelleinrichtung 94 selber.

Es ist dabei insbesondere darauf zu achten, daß die Windungen 128 nicht zu eng sind. Es ist dann ein Kompromiß zu finden zwischen weiten Windungen mit entsprechend hohem Platzbedarf und engen Windungen mit verringertem Platzbedarf aber schlechteren Führungseigenschaften insbesondere in Kurven.

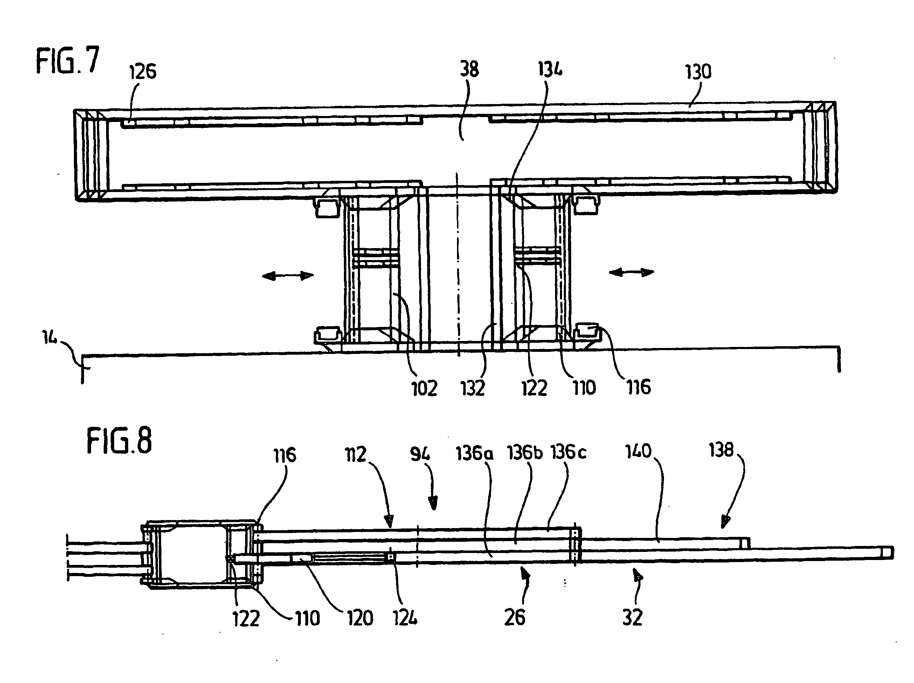

In Figur 7 ist der Aufnahmeraum 38 von oben gezeigt. Dieser ist in einem geschlossenen Magazinbehälter 130 gebildet, welcher einen im wesentlichen rechteckigen Querschnitt aufweist. Zwischen diesem Magazinbehälter 130 und dem Tank 14 ist dabei der Mast 110 angeordnet. Von dem Tank 14 führen Verbindungsleitungen 132 beispielsweise durch den Mast 110 zu der Ausbringeinrichtung 16 auf der Bahnführung 126, so daß Flüssigkeit von dem Tank in die Ausbringeinrichtung 16 (in der Figur 7 nicht gezeigt) eingespeist werden kann. Insbesondere ist ein Steuerventil vorgesehen (in der Zeichnung nicht gezeigt), durch das die Flüssigkeitszufuhr von dem Tank 14 zu der Ausbringeinrichtung 16 steuerbar und insbesondere auch abschaltbar ist.

Von dem Aufnahmeraum 38 führt eine Öffnung 134 in dem Magazinbehälter 130 zu der Gestelleinrichtung 94.

Diese ist separat in der Figur 8 in ihrer Einsatzstellung 26 gezeigt. Die Parallelogrammstruktur 32 der Gestelleinrichtung 94 umfaßt quer nebeneinanderliegende einzelne Parallelogrammstrukturen. Beispielsweise umfaßt das innere Halteelement 112, wie in Figur 8 gezeigt, drei im wesentlichen gleich ausgebildete einzelne Halteelemente 136a, 136b und 136c, wobei die Stütze 120 an das Halteelement 136a angelenkt ist. Das Halteelement 136b wiederum ist drehverschieblich an dem Mast 110 geführt und die äußeren Halteelemente 136a und 136c sind so an das Halteelement 136b angelenkt, daß sie bezüglich dieses Halteelements 136b drehfest sind, d. h. sich mit dem Halteelement 136b verschwenken und entsprechend auch über das Halteelement 136b verschieblich an dem Mast 110 geführt sind.

Dadurch, daß das innere Halteelement 112 durch drei Halteelemente 136a, b, c gebildet ist, ist die Stabilität des inneren Halteelements 112 erhöht, wobei der konstruktive Aufwand im wesentlichen nicht erhöht ist, da die einzelnen Halteelemente 136a, b und c im wesentlichen gleich ausgebildet sind. Es können je nach Belastung auch mehr oder weniger einzelne Halteelemente vorgesehen sein (belastungsoptimierte Schichtung).

Entsprechend ist dann bei einem benachbarten Halteelement 138 eine Verdoppelung 140 vorgesehen, um die Stabilität zu erhöhen.

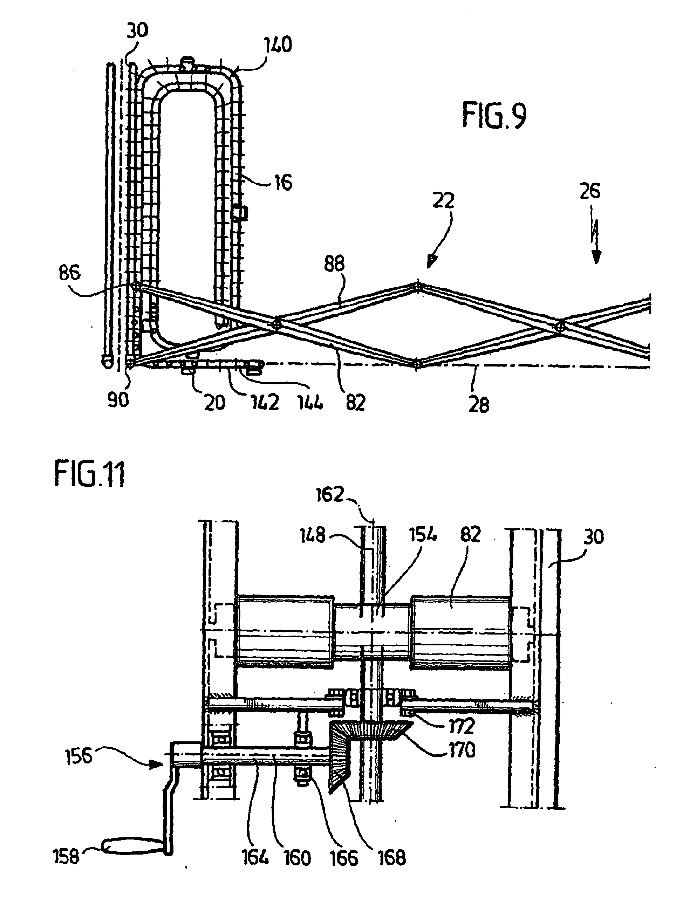

Bei einem weiteren Ausführungsbeispiel, welches in Figur 9 gezeigt ist, ist die Gestelleinrichtung grundsätzlich so ausgebildet, wie oben im Zusammenhang mit Figur 3 beschrieben. Es werden deshalb für gleiche Bauteile die gleichen Bezugszeichen verwendet. Bei der gezeigten Ausführungsform ist eine Bahnführung 140 in dem Aufnahmeraum 38 für die Ausbringeinrichtung 16 vorgesehen.

Die Ausbringeinrichtung 16 umfaßt dabei eine Energiekette 142, diese wiederum setzt sich zusammen aus einzelnen Kettengliedern 144, welche derart angeordnet und ausgebildet sind, daß die Energiekette 142 derart flexibel ist, daß sie auf der Bahnführung 140 führbar ist und in eine Einsatzstellung bei der Einsatzstellung 26 der Gestelleinrichtung 22 bringbar ist und aus ihrer Einsatzstellung wieder auf der Bahnführung 140 in den Aufnahmeraum 38 rückschiebbar ist, aber quer zur Ausbringlinie 28 in Richtung der Schwenkachse der Parallelogrammstruktur 32 eine stark eingeschränkte Flexibilität aufweist.

Die Energiekette 142 ist an einem vorderen Ende mit dem äußeren Halteelement 68 verbunden (in der Figur 9 nicht gezeigt).

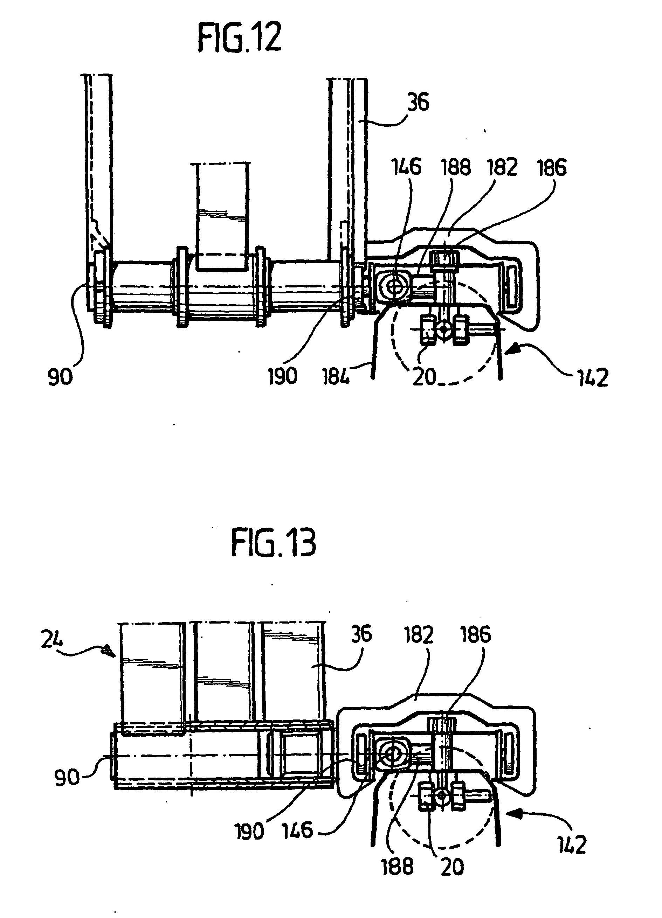

In der Energiekette sind in einem bestimmten Abstand Düsen 20 angeordnet, wobei dieser Abstand dem Abstand der Düsen in der Einsatzstellung 26 der Gestelleinrichtung 22 entspricht. Die einzelnen Düsen sind über einen Schlauch 146 (vgl. Figuren 12, 13) miteinander verbunden und so mit Flüssigkeit von dem Tank 18 versorgbar. Durch die Führung in der Energiekette 142 sind die Düsen 20 und der Schlauch 146 auch gegenüber Beschädigungen geschützt.

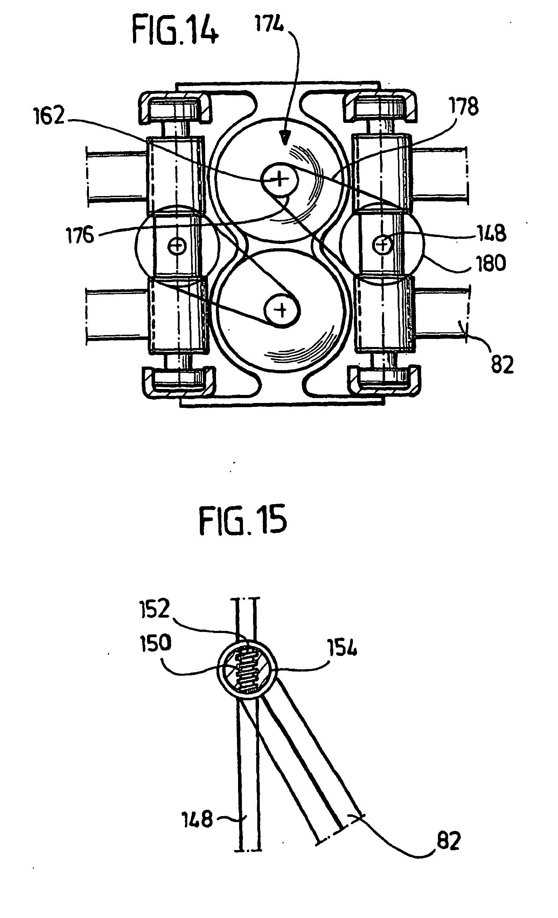

Zur Verschiebung des ersten Kreuzarms 82 der Gestelleinrichtung 22 an dem Mast 30 ist bei einer Variante einer Ausführungsform eine Spindelführung vorgesehen (Figur 10, 11, 14, 15). In Figur 10 ist der Mast in einer Schnittdarstellung gezeigt, wobei dort die Gestelleinrichtung 22 in der Einsatzstellung 26 ist. Der erste Kreuzarm 82 ist dabei an dem Mast über eine Spindel 148 verschieblich. Diese Spindel ist mit einem Außengewinde 150 versehen, welches in ein entsprechendes Innengewinde 152 einer Gewindeführung 154 am ersten Kreuzarm 82 eingreift. Durch Drehung der Spindel 148 läßt sich dann die Gewindeführung 154 relativ zur Spindel 148 verschieben und dadurch eine Verschieblichkeit des ersten Kreuzarms 82 an dem Mast 30 ausbilden (Figur 15).

Zur Drehung der Spindel 148 kann, wie in den Figuren 10 und 11 gezeigt, ein Kurbelantrieb 156 vorgesehen sein. Dieser umfaßt einen drehbar gelagerten Handgriff 158, wobei eine Drehachse 160 quer zu einer Längsrichtung 162 des Masts 30 ist (Figur 10). Eine zugeordnete Drehwelle 164 ist dabei über Drehlager 166 drehbar an dem Mast 30 gelagert. An dieser Drehwelle 164 sitzt ein Kegelrad 168, welches in ein Kegelrad 170 eingreift, welches um eine Drehachse kollinear zur Längsrichtung 162 des Masts 30 drehbar ist. Durch die Kegelräder 168 und 170 wird eine Drehung der Drehwelle 164 um die Drehachse 116 in eine Drehung um die Längsrichtung 162 umgesetzt.

Das Kegelrad 170 ist mit der Spindel 148 verbunden, um so über den Handgriff 158 die Spindel drehen zu können und dadurch den ersten Kreuzarm 82 in Längsrichtung 162 an dem Mast 30 verschieben zu können.

Die Spindel 148 ist dabei in einem Drehlager 172 an dem Mast 30 gelagert.

Alternativ oder zusätzlich kann, wie in Figur 14 gezeigt, ein Motorantrieb 174 zum Antrieb der Drehbewegung der Spindel 148 vorgesehen sein. Der Motorantrieb 174 bringt dabei eine Riemenscheibe 176 in Rotation, die über einen Transmissionsriemen 178 eine drehfest an der Spindel 148 sitzende Riemenscheibe 180 antreibt und damit die Drehung der Spindel 148 zur Verschiebung längs der Richtung 162 an dem Mast 30 bewirkt.

Der Motorantrieb 174 sitzt insbesondere an oder in der Nähe eines unteren Endes des Masts 30.

Insbesondere ist es vorgesehen, daß der Motorantrieb 174 von der Fahrgastzelle des Schleppers 10 aus steuerbar ist, so daß der Fahrer die Gestelleinrichtung 22 ausfahren und einfahren kann, ohne die Fahrgastzelle verlassen zu müssen.

Wie in den Figuren 10, 12 und 13 gezeigt ist, ist ein Halteelement 36 mit einem Führungsprofil 182 versehen, welches im Querschnitt rechteckförmig ausgebildet ist. In einem solchen Führungsprofil 182 ist die Energiekette 142 geführt. Ein Führungsprofil 182 ermöglicht dabei eine Führung parallel zur Ausbringlinie 28 und hält die Energiekette sowohl quer zur Ausbringlinie als auch bezüglich der vertikalen Richtung. Ein Führungsprofil 182 sitzt dabei bevorzugterweise an oder in der Nähe eines Gelenks 58 eines Halteelements 36.

Die Energiekette umfaßt dabei, wie in Figur 12 gezeigt, eine U-förmige, nach unten in Sprüh- oder Spritzrichtung einer Düse 20 geöffnete U-förmige Schutzleiste 184, welche dazu dient, Beschädigungen einer Düse 20 zu vermeiden. In einer solchen Schutzleiste 184 sitzt dann eine Düse 20, mittels der Flüssigkeit nach unten beispielsweise auf ein Feld sprühbar oder spritzbar ist. Die Düse 20 selber ist beispielsweise mittels einer Formschlußverbindung 186 in dem entsprechenden Kettenglied der Energiekette 142 gehalten. Sie ist mit dem Schlauch 146 über einen entsprechenden Zuführungskanal 188 verbunden.

Einer Düse 20 in einem Kettenglied ist ein Stellstift 190 zugeordnet, durch den die Düse 20 abschaltbar ist. Der Stellstift 190 ist dabei derartig angeordnet und ausgebildet, daß, wenn eine Düse in den Magazinbehälter 130 eingefahren wird, automatisch abgeschaltet wird. Dazu ist es beispielsweise vorgesehen, daß der Magazinbehälter 130 eine Führungskontur (in der Zeichnung nicht gezeigt) aufweist, die den Stellstift 190 in eine Sperrstellung drückt, welche wiederum die Düse 20 sperrt, wie in Figur 13 gezeigt.

Wird die Düse 20 über die Energiekette 142 aus dem Magazinbehälter 130 herausgefahren, dann kann der Stellstift 190, der insbesondere federbeaufschlagt ist oder in einer alternativen Ausführungsform selbsthemmend geführt ist, d. h. sich nur bei externer Kraftbeaufschlagung bewegt, aus seiner Zwangsführung sich hinausbewegen und damit die zugeordnete Düse, wie in Figur 12 gezeigt, freigeben, so daß diese mit Flüssigkeit versorgt wird und entsprechend sprühen bzw. spritzen kann.

Die erfindungsgemäße Vorrichtung zum Ausbringen von Flüssigkeit auf eine Fläche funktioniert wie folgt:

Der Schlepper 10 wird mit gefülltem Tank auf ein Feld gefahren, wobei die Gestelleinrichtung 22 bzw. 94 bei der Fahrt außerhalb des Feldes in der Transportstellung 24 ist und die Ausbringeinrichtung 16 in dem Aufnahmeraum 38 auf die Trommel 40 aufgewickelt ist bzw. in der Bahnführung 126 liegt.

Zum Einsatz wird die Gestelleinrichtung ausgefahren, indem die Stütze 120 ausgefahren wird bzw. die Spindel 148 in Drehung versetzt wird. Dazu ist ein Hydraulikantrieb bzw. ein Motorantrieb 174 vorgesehen, wobei der Fahrer von der Fahrgastzelle aus den entsprechenden Antrieb steuern kann. Die Halteelemente 36 verschieben sich dadurch von dem Mast 30 bzw. dem Mast 110 weg, wobei sich die Diagonale 34 der entsprechenden Parallelogrammstruktur 32 verlängert. Durch das Ausfahren der Gestelleinrichtung 22 bzw. 94 wird die Ausbringeinrichtung 16 und insbesondere die Energiekette 142 von der Trommel 40 abgewickelt bzw. von der Bahnführung 126 herausgezogen.

In der Einsatzstellung 26, die beispielsweise eine Spannweite von ca. 36 m oder ca. 28 m umfassen kann, sind dann die Düsen 20 in der Ausbringlinie 28 an der Gestelleinrichtung 22 bzw. 94 gehalten und insbesondere in einem gleichen Abstand gehalten. Dadurch kann in einem kurzen Zeitraum Flüssigkeit in einem großen Flächenbereich auf beispielsweise ein Feld aufgebracht werden, d. h. aufgesprüht oder aufgespritzt werden. Beim Ausfahren der Ausbringeinrichtung 16 aus dem Aufnahmeraum 38 werden dabei die Düsen 20 automatisch angeschaltet. Es ist vorgesehen, daß jede Düse 20 individuell ansteuerbar ist.

Nach Beendigung des Ausbringvorgangs wird der Hydraulikantrieb bzw. der Motorantrieb 124 so betätigt, daß die entsprechende Gestelleinrichtung 22 bzw. 94 aus ihrer Einsatzstellung 26 in die Transportstellung 24 zurückfährt. Dadurch wird die Ausbringeinrichtung 16 in den Aufnahmeraum 38 zurückverschoben. Beim Einschieben einer Düse in den Aufnahmeraum 38 ist dafür gesorgt, daß die Düse abschaltet, um so eine Verunreinigung des Aufnahmeraums 38 durch Flüssigkeit zu vermeiden.

Bei der Gestelleinrichtung 34 wird dabei die Energiekette 142 automatisch in die Bahnführung 126 zurückgeschoben, wenn die Gestelleinrichtung von der Einsatzstellung 26 in die Transportstellung 24 bewegt wird.

Bei der Gestelleinrichtung 22 wird durch entsprechende Drehung der Trommel in die Richtung 92 dafür gesorgt, daß sich die Ausbringeinrichtung 16 auf diese aufwickelt.

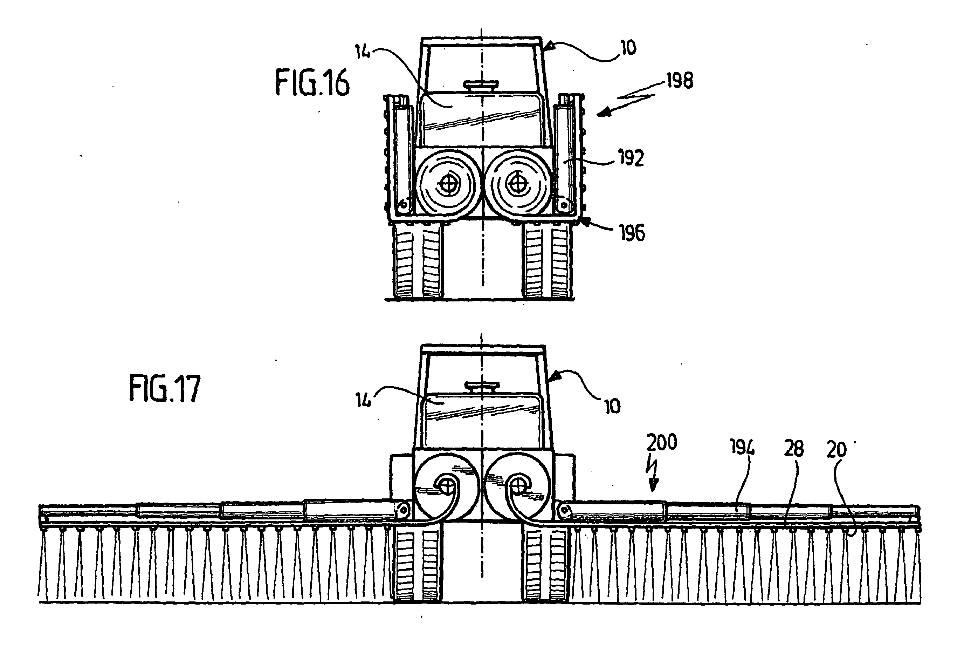

Bei einer weiteren Ausführungsform einer erfindungsgemäßen Vorrichtung zum Ausbringen einer Flüssigkeit auf eine Fläche, welche in den Figuren 16 und 17 gezeigt ist, ist ein Mast 192 vorgesehen, welcher schwenkbar angeordnet ist mit einer Drehrichtung quer zur Ausbringlinie 28.

Der Mast 192 umfaßt in einer teleskopartigen Anordnung Halteelemente 194 (Figur 17), welche ausschiebbar sind. Mit der Verschiebung der Halteelemente 194 wird eine entsprechende Ausbringeinrichtung 196 verschoben.

In einer Transportstellung 198 (Figur 16) sind die Halteelemente 194 im Mast 192 eingefahren und der Mast 192 ist unverschwenkt. In einer Einsatzstellung 200 (Figur 16) ist der Mast verschwenkt und im wesentlichen parallel zur Ausbringlinie 28 ausgerichtet (dadurch ist die Ausbringlinie 28 definiert) und die Halteelemente 194 sind ausgefahren. Dadurch wiederum ist die Ausbringeinrichtung 196 mit den Düsen 20 in eine Einsatzstellung gebracht, d. h. die Düsen 20 sind bezüglich der Ausbringlinie 28 ausgerichtet.

Die oben im Zusammenhang mit den anderen Ausführungsformen beschriebenen Varianten lassen sich auch entsprechend bei dem Ausführungsbeispiel gemäß den Figuren 16 und 17 einsetzen.

## Patentansprüche

1. Fahrbare Vorrichtung zum Ausbringen einer Flüssigkeit auf eine Fläche mit einer Ausbringeinrichtung (16; 196), welche Düsen (20) und eine oder mehrere Zuführungsleitungen (146) zu den Düsen umfaßt, und mit einer Gestelleinrichtung (22; 94; 192) zum Halten der Ausbringeinrichtung (16; 196), wobei die Gestelleinrichtung eine Einsatzstellung (26; 200) aufweist, in der Düsen (20) bezüglich einer Ausbringlinie (28) ausgerichtet sind, und eine Transportstellung (24; 198) aufweist, in welcher eine Querabmessung der Gestelleinrichtung im Vergleich zur Einsatzstellung (26; 200) bezogen auf eine Fahrtrichtung verringert ist, wobei die Gestelleinrichtung ein oder mehrere verschiebliche Halteelemente (36; 194) umfaßt, durch deren Verschiebung die Gestelleinrichtung von d.er Transportstellung (24; 198) in die Einsatzstellung (26; 200) bringbar ist,
**dadurch gekennzeichnet, daß** zur Führung der Düsen (20) und einer oder mehreren Zuführungsleitungen (146) eine Energiekette (142) vorgesehen ist, wobei die Düsen (20) in der Energiekette (142) in einem bestimmten Abstand angeordnet sind, und daß jede Düse (20) individuell ansteuerbar ist.

2. Vorrichtung nach Anspruch 1, **dadurch gekennzeichnet, daß** das oder die Halteelemente (36; 194) so angeordnet und ausgebildet sind, daß sie im wesentlichen parallel zu der Ausbringlinie (28) oder längs der Ausbringlinie (28) verschieblich sind.

3. Vorrichtung nach Anspruch 1 oder 2, **dadurch gekennzeichnet, daß** ein Aufnahmeraum (38) zur zumindest teilweisen Aufnahme der Ausbringeinrichtung (16) in der Transportstellung (24) der Gestelleinrichtung (22) vorgesehen ist.

4. Vorrichtung nach Anspruch 3, **dadurch gekennzeichnet, daß** der Aufnahmeraum (38) geschlossen ist.

5. Vorrichtung nach einem der vorangehenden Ansprüche, **dadurch gekennzeichnet, daß** eine Düse (20) an eine Zuführungsleitung (146) gekoppelt ist.

6. Vorrichtung nach einem der Ansprüche 3 bis 5, **dadurch gekennzeichnet, daß** durch Bewegen der Gestelleinrichtung (22; 94) von der Transportstellung (24) in die Einsatzstellung (26) die Ausbringeinrichtung (16) aus dem Aufnahmeraum (38) in eine Einsatzstellung bringbar ist.

7. Vorrichtung nach Anspruch 6, **dadurch gekennzeichnet, daß** die Ausbringeinrichtung (16) an ein äußeres Halteelement (68) der Gestelleinrichtung (22) so gekoppelt ist, daß beim Bewegen dieses Halteelements (68) in die Einsatzstellung (26) die Ausbringeinrichtung (16) in ihre Einsatzstellung bringbar ist.

8. Vorrichtung nach einem der Ansprüche 3 bis 7, **dadurch gekennzeichnet, daß** die Ausbringeinrichtung (16) durch Bewegen der Gestelleinrichtung (22; 94) aus der Einsatzstellung (26) in die Transportstellung (24) zumindest teilweise in den Aufnahmeraum (38) bringbar ist.

9. Vorrichtung nach einem der Ansprüche 3 bis 8, **dadurch gekennzeichnet, daß** in dem Aufnahmeraum (38) eine Trommel (40) zum Aufwickeln der Ausbringeinrichtung (16) angeordnet ist.

10. Vorrichtung nach Anspruch 9, **dadurch gekennzeichnet, daß** ein gesteuerter Antrieb für die Trommel (40) vorgesehen ist, mittels welchem sich beim Bewegen der Gestelleinrichtung (22) von der Einsatzstellung (26) in die Transportstellung (24) die Ausbringeinrichtung (16) synchron mit der Bewegung der Halteelemente (36) auf die Trommel (40) aufwickelbar ist.

11. Vorrichtung nach einem der Ansprüche 3 bis 8, **dadurch gekennzeichnet, daß** in dem Aufnahmeraum (38) eine Bahnführung (126) für die Ausbringeinrichtung (16) angeordnet ist.

12. Vorrichtung nach Anspruch 11, **dadurch gekennzeichnet, daß** die Bahnführung (126) in Windungen (128) ausgebildet ist.

13. Vorrichtung nach Anspruch 11 oder 12, **dadurch gekennzeichnet, daß** die Bahnführung (126) so angeordnet und ausgebildet ist, daß beim Bewegen der Gestelleinrichtung (94) von der Einsatzstellung (26) in die Transportstellung (24) die Ausbringeinrichtung (16) in der Bahnführung (126) verschiebbar ist.

14. Vorrichtung nach einem der Ansprüche 3 bis 13, **dadurch gekennzeichnet, daß** eine Düse so ausgebildet ist, daß sie beim Einfahren in den Aufnahmeraum (38) sperrbar ist.

15. Vorrichtung nach einem der Ansprüche 3 bis 14, **dadurch gekennzeichnet, daß** eine Düse (20) so ausgebildet ist, daß sie beim Ausfahren aus dem Aufnahmeraum (38) einschaltbar ist.

16. Vorrichtung nach Anspruch 14 oder 15, **dadurch gekennzeichnet, daß** eine Düse mit einem Stellstift (119) versehen ist, welcher außerhalb des Aufnahmeraums (38) in einer Freigabestellung ist und beim Einfahren in den Aufnahmeraum (38) in eine Sperrstellung bringbar ist, bei der die zugeordnete Düse gesperrt ist.

17. Vorrichtung nach Anspruch 16, **dadurch gekennzeichnet, daß** der Aufnahmeraum (38) mit einer Einführungsbahn versehen ist, durch die beim Einfahren einer Düse (20) in den Aufnahmeraum (38) ein Stellstift (190) der Düse (20) von der Freigabestellung in die Sperrstellung bringbar ist.

18. Vorrichtung nach einem der Ansprüche 3 bis 17, **dadurch gekennzeichnet, daß** die Gestelleinrichtung (22; 94) zwischen einem Tank (14) und dem Aufnahmeraum (38) angeordnet ist.

19. Vorrichtung nach einem der vorangehenden Ansprüche, **dadurch gekennzeichnet, daß** zur Verschiebungsführung der Halteelemente (194) eine Teleskopführung vorgesehen ist.

20. Vorrichtung nach Anspruch 19, **dadurch gekennzeichnet, daß** ein Führungsmast (192) für die Teleskopführung vorgesehen ist, welcher um eine Achse quer zur Ausbringlinie (28) schwenkbar ist.

21. Vorrichtung nach einem der Ansprüche 1 bis 18, **dadurch gekennzeichnet, daß** die Gestelleinrichtung (22; 94) eine diagonalenvariable Parallelogrammstruktur (32) umfaßt.

22. Vorrichtung nach Anspruch 21, **dadurch gekennzeichnet, daß** eine längenvariable Diagonale (34) im wesentlichen parallel zur Ausbringlinie (28) orientiert ist.

23. Vorrichtung nach Anspruch 21 oder 22, **dadurch gekennzeichnet, daß** die Vorrichtung einen Mast (30; 110) aufweist, an dem die Parallelogrammstruktur (32) in einem Punkt außerhalb der variablen Diagonale (34) schwenkbar angelenkt ist und in einem weiteren Punkt außerhalb der Diagonale zur Variation der Diagonalen schwenkverschieblich angelenkt ist.

24. Vorrichtung nach einem der Ansprüche 21 bis 23, **dadurch gekennzeichnet, daß** benachbarte Halteelemente (36, 50) so aneinander angelenkt sind, daß mittels ihnen ein Parallelogramm (52) mit variabler Diagonale (34) gebildet ist.

25. Vorrichtung nach einem der Ansprüche 21 bis 24, **dadurch gekennzeichnet, daß** ein Halteelement (26) einen ersten Kreuzarm (44) und einen zweiten Kreuzarm (46) umfaßt, welche schwenkbar aneinander angelenkt sind.

26. Vorrichtung nach Anspruch 25, **dadurch gekennzeichnet, daß** erster und zweiter Kreuzarm (44, 46) im wesentlichen mittig aneinander angelenkt sind.

27. Vorrichtung nach Anspruch 25, **dadurch gekennzeichnet, daß** erster Kreuzarm (44) und zweiter Kreuzarm (46) versetzt bezüglich ihrer Mitte aneinander angelenkt sind.

28. Vorrichtung nach einem der Ansprüche 25 bis 27, **dadurch gekennzeichnet, daß** Kreuzarme (44, 60; 46, 56) benachbarter Halteelemente (36, 50) so schwenkbar aneinander angelenkt sind, daß zwischen den Kreuzarmen ein Parallelogramm (52) mit variabler Diagonale (34) gebildet ist.

29. Vorrichtung nach Anspruch 28, **dadurch gekennzeichnet, daß** eine variable Diagonale (34) zwischen dem Anlenkpunkt (48) des ersten und zweiten Kreuzarms (44, 46) eines Halteelements (36) und dem entsprechenden Anlenkpunkt (54) eines benachbarten Halteelements (50) liegt.

30. Vorrichtung nach einem der Ansprüche 25 bis 29, **dadurch gekennzeichnet, daß** ein erster Kreuzarm (80) eines inneren Halteelements (66) schwenkverschieblich an einem Mast (30) und ein zweiter Kreuzarm (88) des inneren Halteelements (66) schwenkbar an dem Mast (30) angeordnet ist.

31. Vorrichtung nach einem der Ansprüche 21 bis 30, **dadurch gekennzeichnet, daß** eine Schwenkachse der Parallelogrammstruktur (52) zur Diagonalvariation in der Parallelogrammstruktur (32) quer zur Ausbringlinie (28) liegt.

32. Vorrichtung nach einem der Ansprüche 25 bis 31, **dadurch gekennzeichnet, daß** ein Kreuzarm durch ein Lochblech gebildet ist.

33. Vorrichtung nach einem der Ansprüche 21 bis 32, **dadurch gekennzeichnet, daß** eine Mehrzahl von Parallelogrammstrukturen gleicher Diagonalvariabilität quer zur Ausbringlinie (28) nebeneinander angeordnet ist.

34. Vorrichtung nach einem der Ansprüche 23 bis 33, **dadurch gekennzeichnet, daß** ein inneres Halteelement über eine Spindelführung verschieblich an dem Mast (30) geführt ist.

35. Vorrichtung nach einem der Ansprüche 23 bis 33, **dadurch gekennzeichnet, daß** ein inneres Halteelement über eine Drehschiebeführung (114) verschieblich an dem Mast (30) angelenkt ist.

36. Vorrichtung nach Anspruch 35, **dadurch gekennzeichnet, daß** das innere Halteelement über eine Stütze (120) an dem Mast (110) beweglich ist.

37. Vorrichtung nach einem der Ansprüche 23 bis 36, **dadurch gekennzeichnet, daß** ein Antrieb zur Verschiebung des Anlenkpunkts (118) einer Parallelogrammstruktur (32) an dem Mast (110; 30) vorgesehen ist.

38. Vorrichtung nach Anspruch 37, **dadurch gekennzeichnet, daß** ein Hydraulikantrieb vorgesehen ist.

39. Vorrichtung nach Anspruch 38, **dadurch gekennzeichnet, daß** über den Hydraulikantrieb eine Stütze (120) beweglich ist, an welche ein inneres Halteelement (112) angelenkt ist.

40. Vorrichtung nach einem der Ansprüche 37 bis 39, **dadurch gekennzeichnet, daß** ein Spindelantrieb vorgesehen ist, mittels dem eine Spindel (148) drehbar ist, so daß dadurch ein Anlenkpunkt eines inneren Halteelements an dem Mast (30) verschieblich ist.

41. Vorrichtung nach einem der Ansprüche 37 bis 40, **dadurch gekennzeichnet, daß** ein handbetätigbarer Antrieb (156) vorgesehen ist.

42. Vorrichtung nach einem der vorangehenden Ansprüche, **dadurch gekennzeichnet, daß** an einem Halteelement ein Führungsprofil (182) für die Ausbringeinrichtung (16) sitzt.

43. Vorrichtung nach Anspruch 42, **dadurch gekennzeichnet, daß** in der Transportstellung (24) der Gestelleinrichtung (22; 94) die Ausbringeinrichtung (16) in Führungsprofilen (182) der Halteelemente (36) liegt.

44. Vorrichtung nach einem der vorangehenden Ansprüche, **dadurch gekennzeichnet, daß** die Bewegung der Gestelleinrichtung (22; 94; 192) über Antriebseinrichtungen steuerbar ist.

45. Vorrichtung nach Anspruch 44, **dadurch gekennzeichnet, daß** die Bewegung der Gestelleinrichtung (22; 94; 192) von einer Fahrgastzelle aus steuerbar ist.

## Claims

1. Mobile apparatus for distributing a liquid on a surface with a distribution device (16; 196) comprising nozzles (20) and one or more supply lines (146) to the nozzles and with a mounting device (22; 94; 192) for holding the distribution device (16; 196), wherein the mounting device has an operative position (26; 200), nozzles (20) being aligned in relation to a line of distribution (28) in said operative position, and a transport position (24; 198), a transverse dimension of the mounting device being reduced in comparison with the operative position (26; 200) in relation to a direction of travel in said transport position, wherein the mounting device comprises one or more displaceable holding elements (36; 194), the mounting device being arranged to be brought from the transport position (24; 198) into the operative position (26; 200) as a result of the displacement of said elements,
**characterized in that** an energy chain (142) is provided for guiding the nozzles (20) and one or more supply lines (146), wherein the nozzles (20) are arranged in the energy chain (142) at a defined spacing and **in that** each nozzle (20) is individually controllable.

2. Apparatus as defined in claim 1, **characterized in that** the holding element or elements (36; 194) are arranged and configured such that they are displaceable substantially parallel to the line of distribution (28) or along of the line of distribution (28).

3. Apparatus as defined in claim 1 or 2, **characterized in that** a receiving space (38) is provided for the at least partial accommodation of the distribution device (16) in the transport position (24) of the mounting device (22).

4. Apparatus as defined in claim 3, **characterized in that** the receiving space (38) is closed.

5. Apparatus as defined in any one of the preceding claims, **characterized in that** a nozzle (20) is coupled to a supply line (146).

6. Apparatus as defined in any one of claims 3 to 5, **characterized in that** the distribution device (16) is arranged to be moved out of the receiving space (38) into an operative position as a result of movement of the mounting device (22; 94) from the transport position (24) into the operative position (26).

7. Apparatus as defined in claim 6, **characterized in that** the distribution device (16) is coupled to an outer holding element (68) of the mounting device (22) such that the distribution device (16) is arranged to be brought into its operative position during the movement of this holding element (68) into the operative position (26).

8. Device as defined in any one of claims 3 to 7, **characterized in that** the distribution device (16) is arranged to be moved at least partially into the receiving space (38) as a result of movement of the mounting device (22; 94) out of the operative position (26) into the transport position (24).

9. Apparatus as defined in any one of claims 3 to 8, **characterized in that** a drum (40) for taking up the distribution device (16) is arranged in the receiving space (38).

10. Apparatus as defined in claim 9, **characterized in that** a controlled drive for the drum (40) is provided, said drive enabling the distribution device (16) to be wound onto the drum (40) synchronously with the movement of the holding elements (36) during the movement of the mounting device (22) from the operative position (26) into the transport position (24).

11. Apparatus as defined in any one of claims 3 to 8, **characterized in that** a guideway (126) for the distribution device (16) is arranged in the receiving space (38).

12. Apparatus as defined in claim 11, **characterized in that** the guideway (126) is configured in windings (128).

13. Apparatus as defined in claim 11 or 12, **characterized in that** the guideway (126) is arranged and configured such that the distribution device (16) is displaceable in the guideway (126) during the movement of the mounting device (94) from the operative position (26) into the transport position (24).

14. Apparatus as defined in any one of claims 3 to 13, **characterized in that** a nozzle is configured such that it is arranged to be blocked whilst moving into the receiving space (38).

15. Apparatus as defined in any one of claims 3 to 14, **characterized in that** a nozzle (20) is configured such that it is arranged to be switched on whilst moving out of the receiving space (38).

16. Apparatus as defined in claim 14 or 15, **characterized in that** a nozzle is provided with an adjusting pin (119), said pin being in a release position outside the receiving space (38) and being arranged to be brought into a blocking position when moving into the receiving space (38), the associated nozzle being blocked in said blocking position.

17. Apparatus as defined in claim 16, **characterized in that** the receiving space (38) is provided with an introduction path, an adjusting pin (190) of a nozzle (20) being adapted to be brought from the release position into the blocking position by means of said path when the nozzle (20) moves into the receiving space (38).

18. Apparatus as defined in any one of claims 3 to 17, **characterized in that** the mounting device (22; 94) is arranged between a tank (14) and the receiving space (38).

19. Apparatus as defined in any one of the preceding claims, **characterized in that** a telescopic guide means is provided for guiding the displacement of the holding elements (194).

20. Apparatus as defined in claim 19, **characterized in that** a guide pole (192) for the telescopic guide means is provided, said pole being pivotable about an axis transversely to the line of distribution (28).

21. Apparatus as defined in any one of claims 1 to 18, **characterized in that** the mounting device (22; 94) comprises a parallelogram structure (32) variable diagonally.

22. Apparatus as defined in claim 21, **characterized in that** a diagonal (34) variable in length is oriented substantially parallel to the line of distribution (28).

23. Apparatus as defined in claim 21 or 22, **characterized in that** the apparatus has a pole (30; 110), the parallelogram structure (32) being pivotally articulated to said pole at a point outside the variable diagonal (34) and being articulated for pivotal displacement at an additional point outside the diagonal for the purpose of varying the diagonal.

24. Apparatus as defined in any one of claims 21 to 23, **characterized in that** adjacent holding elements (36, 50) are articulated to one another such that a parallelogram (52) with a variable diagonal (34) is formed by means of them.

25. Apparatus as defined in any one of claims 21 to 24, **characterized in that** a holding element (26) comprises a first crossbar (44) and a second crossbar (46) pivotally articulated to one another.

26. Apparatus as defined in claim 25, **characterized in that** first and second crossbars (44, 46) are articulated to one another substantially centrally.

27. Apparatus as defined in claim 25, **characterized in that** first crossbar (44) and second crossbar (46) are articulated to one another offset with respect to their centre.

28. Apparatus as defined in any one of claims 25 to 27, **characterized in that** crossbars (44, 60; 46, 56) of adjacent holding elements (36, 50) are pivotally articulated to one another such that a parallelogram (52) with a variable diagonal (34) is formed between the crossbars.

29. Apparatus as defined in claim 28, **characterized in that** a variable diagonal (34) is located between the point of articulation (48) of the first and second crossbars (44, 46) of one holding element (36) and the corresponding point of articulation (54) of an adjacent holding element (50).

30. Apparatus as defined in any one of claims 25 to 29, **characterized in that** a first crossbar (80) of an inner holding element (66) is arranged on a pole (30) so as to be pivotally displaceable and a second crossbar (88) of the inner holding element (66) is arranged on the pole (30) so as to be pivotable.

31. Apparatus as defined in any one of claims 21 to 30, **characterized in that** a pivot axis of the parallelogram structure (52) for the diagonal variation in the parallelogram structure (32) lies transverse to the line of distribution (28).

32. Apparatus as defined in any one of claims 25 to 31, **characterized in that** a crossbar is formed by a perforated plate.

33. Apparatus as defined in any one of claims 21 to 32, **characterized in that** a plurality of parallelogram structures having the same diagonal variability are arranged next to one another transverse to the line of distribution (28).

34. Apparatus as defined in any one of claims 23 to 33, **characterized in that** an inner holding element is guided by means of a spindle guide so as to be displaceable on the pole (30).

35. Apparatus as defined in any one of claims 23 to 33, **characterized in that** an inner holding element is articulated to the pole (30) so as to be displaceable by means of a rotary sliding guide means (114).

36. Apparatus as defined in claim 35, **characterized in that** the inner holding element is movable on the pole (110) by means of a support (120).

37. Apparatus as defined in any one of claims 23 to 36, **characterized in that** a drive is provided for displacing the point of articulation (118) of a parallelogram structure (32) on the pole (110; 30).

38. Apparatus as defined in claim 37, **characterized in that** a hydraulic drive is provided.

39. Apparatus as defined in claim 38, **characterized in that** a support (120) is movable by means of the hydraulic drive, an inner holding element (112) being articulated to said support.

40. Apparatus as defined in any one of claims 37 to 39, **characterized in that** a spindle drive is provided, a spindle (148) being rotatable by means of said drive such that a point of articulation of an inner holding element on the pole (30) is displaceable as a result.

41. Apparatus as defined in any one of claims 37 to 40, **characterized in that** a hand-operated drive (156) is provided.

42. Apparatus as defined in any one of the preceding claims, **characterized in that** a profiled guide means (182) for the distribution device (16) is seated on a holding element.

43. Apparatus as defined in claim 42, **characterized in that** the distribution device (16) is located in profiled guide means (182) of the holding elements (36) in the transport position (24) of the mounting device (22; 94).

44. Apparatus as defined in any one of the preceding claims, **characterized in that** the movement of the mounting device (22; 94; 192) is controllable by means of drive devices.

45. Apparatus as defined in claim 44, **characterized in that** the movement of the mounting device (22; 94; 192) is controllable from a passenger cabin.

## Revendications

1. Dispositif déplaçable pour la distribution d'un liquide sur une surface, comprenant un dispositif de distribution (16 ; 196) qui comprend des buses (20) et une ou plusieurs conduites d'amenée (146), et comprenant des moyens formant châssis (22 ; 94 ; 192) pour le maintien du dispositif de distribution (16 ; 196), dans lequel les moyens formant châssis présentent une position d'utilisation (26 ; 200) dans laquelle les buses (20) sont orientées par rapport à une ligne de distribution (28) et une position de transport (24 ; 198) dans laquelle une dimension transversale des moyens formant châssis est réduite par rapport à une direction de déplacement, par comparaison à la position d'utilisation (26 ; 200), et dans lequel les moyens formant châssis comprennent un ou plusieurs éléments de maintien déplaçables (36 ; 194) dont le déplacement permet d'amener les moyens formant châssis depuis la position de transport (24 ; 198) jusque dans la position d'utilisation (26 ; 200),
**caractérisé en ce que** pour le guidage des buses (20) et d'une ou plusieurs conduite(s) d'amenée (146), il est prévu une chaîne de transmission d'énergie (142), les buses (20) étant agencées dans la chaîne de transmission d'énergie (142) avec un écartement déterminé, et **en ce que** chaque buse (20) est pilotable individuellement.

2. Dispositif selon la revendication 1, **caractérisé en ce que** le ou les élément(s) de maintien (36 ; 194) est/sont agencé(s) et réalisé(s) de telle manière qu'il(s) est/sont déplaçable(s) essentiellement parallèlement à la ligne de distribution (28) ou le long de la ligne de distribution (28).

3. Dispositif selon l'une ou l'autre des revendications 1 et 2, **caractérisé en ce qu'**il est prévu un compartiment de logement (38) pour loger au moins partiellement le dispositif de distribution (16) dans la position de transport (24) des moyens formant châssis (22).

4. Dispositif selon la revendication 3, **caractérisé en ce que** le compartiment de logement (38) est fermé.

5. Dispositif selon l'une des revendications précédentes, **caractérisé en ce qu'**une buse (20) est couplée à une conduite d'amenée (146).

6. Dispositif selon l'une des revendications 3 à 5, **caractérisé en ce que**, par déplacement des moyens formant châssis (22 ; 94) depuis la position de transport (24) jusque dans la position d'utilisation (26), le dispositif de distribution (16) peut être amené hors du compartiment de logement (38) jusque dans une position d'utilisation.

7. Dispositif selon la revendication 6, **caractérisé en ce que** le dispositif de distribution (16) est couplé à un élément de maintien extérieur (68) des moyens formant châssis (22) de telle sorte qu'en déplaçant cet élément de maintien (68) jusque dans la position d'utilisation (26) le dispositif de distribution (16) peut être amené jusque dans sa position d'utilisation.

8. Dispositif selon l'une des revendications 3 à 7, **caractérisé en ce que** le dispositif de distribution (16) peut être amené au moins partiellement jusque dans le compartiment de logement (38) par déplacement des moyens formant châssis (22 ; 94) depuis la position d'utilisation (26) jusque dans la position de transport (24).

9. Dispositif selon l'une des revendications 3 à 8, **caractérisé en ce qu'**un tambour (40) destiné à l'enroulement du dispositif de distribution (16) est agencé dans le compartiment de logement (38).

10. Dispositif selon la revendication 9, **caractérisé en ce qu'**il est prévu un entraînement commandé pour le tambour (40), au moyen duquel le dispositif de distribution (16), lors du déplacement des moyens formant châssis (22) depuis la position d'utilisation (26) jusque dans la position de transport (24), peut être enroulé sur le tambour (40) de façon synchrone avec le déplacement des éléments de maintien (36).

11. Dispositif selon l'une des revendications 3 à 8, **caractérisé en ce qu'**une voie de guidage (126) pour le dispositif de distribution (16) est agencée dans le compartiment de logement (38).

12. Dispositif selon la revendication 11, **caractérisé en ce que** la voie de guidage (126) est réalisée sous forme de spires (128).

13. Dispositif selon l'une ou l'autre des revendications 11 et 12, **caractérisé en ce que** la voie de guidage (126) est agencée et réalisée de telle manière qu'en déplaçant les moyens formant châssis (94) depuis la position d'utilisation (26) jusque dans la position de transport (24), le dispositif de distribution (16) peut être déplacé dans la voie de guidage (126).

14. Dispositif selon l'une des revendications 3 à 13, **caractérisé en ce qu'**une buse est ainsi réalisée qu'elle peut être fermée lors de l'entrée dans le compartiment de logement (38).

15. Dispositif selon l'une des revendications 3 à 14, **caractérisé en ce qu'**une buse (20) est ainsi réalisée qu'elle peut être mise en service lors de la sortie hors du compartiment de logement (38).

16. Dispositif selon l'une ou l'autre des revendications 14 et 15, **caractérisé en ce qu'**une buse est pourvue d'un doigt de positionnement (119) qui se trouve à l'extérieur du compartiment de logement (38) dans une position de libération et qui peut être amené, lors de l'entrée dans le compartiment de logement (38), jusque dans une position de fermeture dans laquelle la buse associée est fermée.

17. Dispositif selon la revendication 16, **caractérisé en ce que** le compartiment de logement (38) est pourvu d'une voie d'entrée au moyen de laquelle le doigt de positionnement (190) de la buse (20) peut être amené depuis la position de libération jusque dans la position de fermeture lors de l'entrée d'une buse (20) dans le compartiment de logement (38).

18. Dispositif selon l'une des revendications 3 à 17, **caractérisé en ce que** les moyens formant châssis (22 ; 94) sont agencés entre un réservoir (14) et le compartiment de logement (38).

19. Dispositif selon l'une des revendications précédentes, **caractérisé en ce qu'**il est prévu un guidage télescopique pour le guidage en déplacement des éléments de maintien (194).

20. Dispositif selon la revendication 19, **caractérisé en ce qu'**il est prévu un mât de guidage (192) pour le guidage télescopique, qui peut être bascule autour d'un axe transversalement à la ligne de distribution (28).

21. Dispositif selon l'une des revendications 1 à 18, **caractérisé en ce que** les moyens formant châssis (22 ; 94) comprennent une structure en parallélogramme (32) à diagonale variable.

22. Dispositif selon la revendication 21, **caractérisé en ce qu'**une diagonale (34) à longueur variable est orientée essentiellement parallèlement à la ligne de distribution (28).

23. Dispositif selon l'une ou l'autre des revendications 21 et 22, **caractérisé en ce que** le dispositif comprend un mât (30 ; 110) sur lequel la structure à parallélogramme (32) est articulée en un point à l'extérieur de la diagonale variable (34) en pivotement, et est articulée en un autre point à l'extérieur de la diagonale en pivotement et en translation en vue de faire varier la diagonale.

24. Dispositif selon l'une des revendications 21 à 23, **caractérisé en ce que** des éléments de maintien voisins (36, 50) sont articulés l'un à l'autre de telle façon qu'ils forment un parallélogramme (52) à diagonale variable (34).

25. Dispositif selon l'une des revendications 21 à 24, **caractérisé en ce qu'**un élément de maintien (26) comprend un premier bras en croix (44) et un second bras en croix (46), lesquels sont articulés en pivotement l'un à l'autre.

26. Dispositif selon la revendication 25, **caractérisé en ce que** le premier bras en croix (44) et le second bras en croix (46) sont articulés l'un à l'autre essentiellement au milieu.

27. Dispositif selon la revendication 25, **caractérisé en ce que** le premier bras en croix (44) et le second bras en croix (46) sont articulés l'un à l'autre de façon déportée par rapport à leur milieu.

28. Dispositif selon l'une des revendications 25 à 27, **caractérisé en ce que** les bras en croix (44, 60 ; 46, 56) d'éléments de maintien voisins (36, 50) sont articulés en pivotement les uns aux autres de telle manière qu'il se forme entre les bras en croix un parallélogramme (52) à diagonale variable (34).

29. Dispositif selon la revendication 28, **caractérisé en ce qu'**une diagonale variable (34) est définie entre le point d'articulation (48) du premier et du second bras en croix (44, 46) d'un élément de maintien (36) et le point d'articulation correspondant (54) d'un élément de maintien voisin (50).

30. Dispositif selon l'une des revendications 25 à 29, **caractérisé en ce qu'**un premier bras en croix (80) d'un élément de maintien intérieur (66) est agencé en translation et en pivotement sur un mât (30), et un second bras en croix (88) de l'élément de maintien intérieur (66) est agencé en pivotement sur le mât (30).

31. Dispositif selon l'une des revendications 21 à 30, **caractérisé en ce qu'**un axe de pivotement de la structure à parallélogramme (52) est disposé en vue d'assurer une variation de la diagonale dans la structure à parallélogramme (32) transversalement à la ligne de distribution (28).

32. Dispositif selon l'une des revendications 25 à 31, **caractérisé en ce qu'**un bras en croix est formé par une tôle à trous.

33. Dispositif selon l'une des revendications 21 à 32, **caractérisé en ce qu'**une pluralité de structures à parallélogramme présentant la même variabilité quant à la diagonale transversalement à la ligne de distribution (28) sont agencées les unes à côté des autres.

34. Dispositif selon l'une des revendications 23 à 33, **caractérisé en ce qu'**un élément de maintien intérieur est guidé en translation sur le mât (30) au moyen d'un guidage à broche.

35. Dispositif selon l'une des revendications 23 à 33, **caractérisé en ce qu'**un élément de maintien intérieur est articulé en translation sur le mât (30) au moyen d'un guidage à rotation/translation (114).

36. Dispositif selon la revendication 35, **caractérisé en ce que** l'élément de maintien intérieur est mobile sur le mât (110) par l'intermédiaire d'un soutien (120).

37. Dispositif selon l'une des revendications 23 à 36, **caractérisé en ce qu'**il est prévu un entraînement pour la translation du point d'articulation (118) d'une structure à parallélogramme (32) sur le mât (110 ; 30)

38. Dispositif selon la revendication 37, **caractérisé en ce qu'**il est prévu un entraînement hydraulique.

39. Dispositif selon la revendication 38, **caractérisé en ce qu'**au moyen de l'entraînement hydraulique, un soutien (120) est capable de se déplacer, sur lequel un élément de maintien intérieur (112) est articulé.

40. Dispositif selon l'une des revendications 37 à 39, **caractérisé en ce qu'**il est prévu un entraînement à broche au moyen duquel une broche (148) peut être mise en rotation, de sorte qu'un point d'articulation d'un élément de maintien intérieur est ainsi déplaçable en translation sur le mât (30).

41. Dispositif selon l'une des revendications 37 à 40, **caractérisé en ce qu'**il est prévu un entraînement à actionnement manuel (156).

42. Dispositif selon l'une des revendications précédentes, **caractérisé en ce qu'**un profil de guidage (182) pour le dispositif de distribution (16) est monté sur un élément de maintien.

43. Dispositif selon la revendication 42, **caractérisé en ce que**, dans la position de transport (24) des moyens formant châssis (22 ; 94), le dispositif de distribution (16) est disposé dans des profilés de guidage (182) des éléments de maintien (36).

44. Dispositif selon l'une des revendications précédentes, **caractérisé en ce que** le déplacement des moyens formant châssis (22 ; 94 ; 192) peut être commandé par l'intermédiaire de moyens d'entraînement.

45. Dispositif selon la revendication 44, **caractérisé en ce que** le déplacement des moyens formant châssis (22 ; 94 ; 192) peut être commandé à partir d'une cabine.
